# EUROPÄISCHE PATENTSCHRIFT

(11) **EP 3 452 857 B1**
(45) Veröffentlichungstag und Bekanntmachung des Hinweises auf die Patenterteilung: **28.01.2026**
(21) Anmeldenummer: 17716540.4
(22) Anmeldetag: 11.04.2017
(51) Int. Cl.: G02B 21/00, G02B 21/08, G02B 21/14, G02B 21/36, G02B 27/58

(54) **BELEUCHTUNGSMODUL FÜR WINKELSELEKTIVE BELEUCHTUNG**
ILLUMINATION MODULE FOR ANGLE-SELECTIVE ILLUMINATION
MODULE D'ÉCLAIRAGE POUR ÉCLAIRAGE À SÉLECTIVITÉ ANGULAIRE

(30) Priorität: 02.05.2016 DE 102016108119; 01.09.2016 DE 102016116309
(43) Veröffentlichungstag der Anmeldung: 13.03.2019
(73) Patentinhaber: Carl Zeiss Microscopy GmbH, 07745 Jena (DE)
(72) Erfinder: STOPPE, Lars, 07743 Jena (DE); GÖGLER, Michael, 82515 Wolfratshausen (DE); OHRT, Thomas, 07751 Golmsdorf (DE)
(74) Vertreter: Kraus & Lederer PartGmbB
(86) Internationale Anmeldenummer: PCT/EP2017/058615
(87) Internationale Veröffentlichungsnummer: WO 2017/190919

(56) Entgegenhaltungen:
- EP-A1- 1 698 927
- DE-U1- 202006 013 464
- US-A1- 2004 141 175
- US-A1- 2007 211 460
- US-A1- 2008 062 424
- US-A1- 2011 309 241
- ANONYMOUS: "Carl Zeiss LSM 700 Operating Manual", 1 September 2011 (2011-09-01), XP093155520, Retrieved from the Internet <URL:https://uwaterloo.ca/microscopy-electrophysiology-facility/sites/default/files/uploads/documents/lsm_700_zen_2011_full_manual_sept_2011_version_0.pdf>
- ANONYMOUS: "Carl Zeiss LSM 700 Operating Manual ANNEX", 1 September 2011 (2011-09-01), XP093155524, Retrieved from the Internet <URL:https://uwaterloo.ca/microscopy-electrophysiology-facility/sites/default/files/uploads/documents/lsm_700_zen_2011_full_manual_sept_2011_version_0.pdf>

## Beschreibung

### TECHNISCHES GEBIET

Verschiedene Ausführungsformen der Erfindung betreffen ein Laser-Scanning-Mikroskop und ein Mikroskop. In verschiedenen Ausführungsformen umfasst ein Beleuchtungsmodul für eine entsprechende optische Vorrichtung einen Träger mit mehreren Lichtquellen und optional mindestens einen lichtdurchlässigen Bereich.

### HINTERGRUND

Die US 2008/062424 A1 offenbart ein kompaktes Ringlicht, das die Leistung eines viel größeren Ringlichts nachahmt. Dabei wird eine Ringlichtquelle und ein konischer oder zylindrischer Reflektor genutzt, sodass das Licht zuerst die optische Achse kreuzt und dann zurück in Richtung des Inspektionsbereichs reflektiert wird. Dieses Licht ist besonders nützlich für die Inspektion elektronischer Halbleiter-Einrichtungen.

Die US 2007/211460 A1 beschreibt eine mehrfarbige LED-Lichtquelle für Durchlichtbeleuchtung, die mit den meisten Mikroskopen kompatibel ist. Die Lichtquelle bietet eine räumlich und winkelmäßig gleichmäßige monochromatische Beleuchtung in Rot, Grün oder Blau oder in Kombinationen dieser Farben. Der Wechsel der Wellenlängen erfolgt sehr schnell, was für das automatisierte Scannen von Proben wünschenswert ist. Die Lichtquelle ist kostengünstig und kompakt; sie kann im Kondensorraum eines typischen Mikroskops untergebracht werden, wodurch die Standard-Weißlichtquelle, der Kondensor und die Lichtfiltereinrichtung entfallen. Es werden auch verschiedene Mittel zur Lichtformung für die Beleuchtung mikroskopischer Proben bereitgestellt. Darüber hinaus wird auch ein Verfahren zur Aufnahme von Vollfarbbildern mit der vorhandenen Lichtquelle und einer monochromen Kamera bereitgestellt.

Die EP 1 698 927 A1 offenbart ein konfokales Laserscanningmikroskop mit zusätzlicher Beleuchtungsquelle (Halogenlampe) für die Durchlichtaufnahmen der Probe. Ein mechanischer Kippspiegel kann zum Umschalten zwischen Durchlichtbeleuchtung und Durchlichtdetektion verwendet werden.

In der Betriebsanleitung (Carl Zeiss LSM 700 Operating Manual, XP093155520 vom 1.9.2011) wird eine Halogenlampe beschrieben.

Aus DE 10 2014 112 242 A1 sind Techniken bekannt, um eine Probe aus unterschiedlichen Beleuchtungsrichtungen zu beleuchten (winkelselektive Beleuchtung oder strukturierte Beleuchtung). Durch Kombination der für die unterschiedlichen Beleuchtungsrichtungen erhaltenen Bilder, kann ein Ergebnisbild bestimmt werden, welches z.B. einen Phasenkontrast aufweist. Mittels der winkelselektiven Beleuchtung kann also durch digitale Nachbearbeitung Phasenkontrastbildgebung möglich sein.

Teilweise kann es schwierig sein, entsprechende Beleuchtungsmodule für die winkelselektive Beleuchtung mit herkömmlichen optischen Vorrichtungen, wie zum Beispiel einem Laser-Scanning-Mikroskop (LSM) oder einem Lichtmikroskop mit Objektiv zu kombinieren. Dies kann der Fall sein, da in solchen herkömmlichen optischen Vorrichtungen oftmals nur begrenzter Bauraum vorhanden ist.

### ZUSAMMENFASSUNG

Deshalb besteht ein Bedarf für verbesserte Implementierungen von Beleuchtungsmodulen für die winkelselektive Beleuchtung. Insbesondere besteht ein Bedarf für entsprechende Beleuchtungsmodule, die sich flexibel in den Strahlengang einer optischen Vorrichtung integrieren lassen.

Diese Aufgabe wird von den Merkmalen eines Laser-Scanning-Mikroskops des unabhängigen Patentanspruchs gelöst. Die abhängigen Patentansprüche definieren Ausführungsformen.

Gemäß einem Beispiel umfasst ein LSM ein erstes Beleuchtungsmodul mit einer Laserlichtquelle. Das LSM umfasst auch ein zweites Beleuchtungsmodul mit einem Träger und mit mehreren Lichtquellen, die auf dem Träger angeordnet sind.

Für ein solches LSM lassen sich Aspekte der winkelselektiven Beleuchtung kombinieren mit der Laser-Scanning-Bildgebung.

Zum Beispiel kann das LSM zur Fluoreszenzbildgebung eingerichtet sein. Dazu umfasst das LSM einen Probenhalter. Der Probenhalter fixiert ein Probenobjekt, wie beispielsweise eine biologische Probe oder eine Zellkultur, im Strahlengang. Das Probenobjekt kann z.B. ein Phasenobjekt sein, das in Bezug auf durchtretendes Licht eine signifikante Phasenänderung bewirkt. Durch das Laserlicht können Fluoreszenz-Prozesse in der biologischen Probe angeregt werden. Der Detektor kann dann eingerichtet sein, um ein entsprechendes Fluoreszenzsignal des Probenobjekts zu detektieren.

Zum Beispiel kann der Detektor als Photomultiplier (PMT) ausgebildet sein. Zum Beispiel kann der Detektor in Transmissions-Geometrie oder Reflexions-Geometrie angeordnet sein, das heißt in Bezug auf das erste Beleuchtungsmodul hinter (Durchtrittsstrahlengang) oder vor (Reflektionsstrahlengang) dem Probenhalter angeordnet sein. Wenn der Detektor im Durchtrittsstrahlengang angeordnet ist, kann zum Beispiel ein Hellfeld-Transmissionsbild erzeugt werden.

Es ist zum Beispiel möglich, dass sich das Detektionsspektrum des Detektors unterscheidet von einem Emissionsspektrum der Laserlichtquelle. Dies kann der Fall sein, da die Fluoreszenz-Prozesse eine Wandlung der Wellenlänge zwischen absorbiertem Licht und emittiertem Licht bewirken können. Es wäre aber auch möglich, dass das Detektionsspektrum des Detektors zumindest teilweise überlappt mit dem Emissionsspektrum der Laserlichtquelle.

Es ist grundsätzlich möglich, dass das LSM mehr als einen Detektor zur Detektion des Fluoreszenzsignals umfasst. Zum Beispiel könnte ein erster Detektor im Durchtrittsstrahlengang angeordnet sein und ein zweiter Detektor im Reflektionsstrahlengang. Zum Beispiel könnte der zweite Detektor durch Airy-Einheit ergänzt sein. Zum Beispiel könnte der zweite Detektor in Bezug auf den Probenhalter hinter einer Scanoptik des LSMs angeordnet sein.

Beispielsweise kann der Träger in einem durch die Laserlichtquelle definierten Strahlengang angeordnet sein. Z.B. könnte der Träger eine Ausdehnung senkrecht zum Strahlengang aufweisen. Der Träger kann sich also beispielsweise in einer Ebene erstrecken, die senkrecht zum Strahlengang angeordnet ist. Der Träger kann sich aber auch in einer Ebene erstrecken, die einen Winkel zwischen 0° und 90° mit einem Zentralstrahl des Strahlengangs einschließt. Der Träger kann also verkippt gegenüber dem Strahlengang angeordnet sein. Dabei kann es möglich sein, dass der Träger auch eine gewisse Ausdehnung (Dicke) parallel zum Strahlengang aufweist.

In beispielhaften Implementierungen ist es möglich, dass der Träger mindestens einen lichtdurchlässigen Bereich aufweist. Der mindestens eine lichtdurchlässige Bereich kann z.B. innerhalb eines äußeren Umfangs des Trägers ausgebildet sein.. In verschiedenen Beispielen kann der mindestens eine lichtdurchlässige Bereich innerhalb des Trägers, d.h. beabstandet von Außenkanten bzw. einem Umfang des Trägers angeordnet sein. Ein Außenumfang des Trägers kann also den mindestens einen lichtdurchlässigen Bereich einschließen.

Der mindestens eine lichtdurchlässige Bereich kann z.B. Transmission eines signifikanten Anteils von Licht in einem bestimmten Spektralbereich senkrecht zum Träger, d.h. entlang dessen Dicke, ermöglichen. Insbesondere kann der lichtdurchlässige Bereich zum Beispiel einen Transmissionsgrad aufweisen, der größer als 20 % ist, bevorzugt >80 %, besonders bevorzugt >90 % ist. Dabei ist es im Allgemeinen nicht erforderlich, dass der lichtdurchlässige Bereich über einen besonders großen spektralen Bereich einen entsprechend großen Transmissionsgrad aufweist. Es wäre zum Beispiel möglich, dass der lichtdurchlässige Bereich lediglich in einem bestimmten spektralen Bereich einen signifikanten Transmissionsgrad aufweist und in anderen spektralen Bereichen nur einen vergleichsweise geringen Transmissionsgrad aufweist.

Z.B. kann der Strahlengang zumindest teilweise durch den mindestens einen lichtdurchlässigen Bereich hindurchtreten. Es wäre also möglich, dass das zweite Beleuchtungsmodul im Strahlengang, der durch die Laserlichtquelle definiert ist, angeordnet ist. Z.B. könnte das zweite Beleuchtungsmodul konzentrisch mit einem Zentralstrahl des Strahlengangs angeordnet sein.

Durch das Vorsehen des zweiten Beleuchtungsmoduls mit dem lichtdurchlässigen Bereich können Techniken der winkelselektiven Beleuchtung flexibel mit dem Aufbau des LSMs verbunden werden. Insbesondere kann es möglich sein, dass zweite Beleuchtungsmodul innerhalb des Strahlengangs anzuordnen. Dies ist der Fall, da mittels des lichtdurchlässigen Bereichs erreicht werden kann, dass der Strahlengang nicht oder nicht signifikant durch das zweite Beleuchtungsmodul verändert wird. Dabei sind unterschiedlichste Techniken möglich, um den lichtdurchlässigen Bereich in dem Träger auszubilden. Die verschiedenen hierin beschriebenen Beispiele zum Ausbilden des lichtdurchlässigen Bereichs können in verschiedenen Szenarien auch miteinander kombiniert werden.

Ein Beispiel betrifft die Implementierung des lichtdurchlässigen Bereichs als Loch. Dabei kann das Loch zum Beispiel als Durchgangsbohrung ausgebildet sein. In anderen Worten kann es möglich sein, den lichtdurchlässigen Bereich als Aussparung des Materials des Trägers zu implementieren.

Ein Loch, welches dezentral auf dem Träger angeordnet ist, hat einen Mittelpunkt, der einen gewissen Abstand zu dem Zentrum des Trägers aufweist.

Gemäß der beanspruchten Erfindung ist das Zentrum des Trägers durch denjenigen Punkt des Trägers definiert ist, der durch einen Zentralstrahl des Strahlengangs bestimmt ist. Das Loch kann laterale Ausmaße einer durch eine Oberfläche des Trägers definierten Ebene aufweisen, welche mit einer Strahlweite des Strahlengangs im Bereich des zweiten Beleuchtungsmoduls korrelieren. Zum Beispiel können die lateralen Ausmaße des Lochs mehr als 50 % der Strahlweite des Strahlengangs betragen, bevorzugt mehr als 90 %, besonders bevorzugt mehr als 120 %.

Durch das Implementieren des lichtdurchlässigen Bereichs als Loch kann erreicht werden, dass der Transmissionsgrad des lichtdurchlässigen Bereichs des Trägers besonders groß ist. Außerdem kann der Träger einfach hergestellt werden, beispielsweise durch Bohren oder Fräsen.

In verschiedenen Beispielen kann das Loch bei Anordnung des zweiten Beleuchtungsmoduls im LSM frei bleiben; d.h. es können keine weiteren optisch wirksamen Elementen innerhalb des Lochs angeordnet sein. In anderen Beispielen wäre es aber möglich, dass optische Elemente, wie z.B. eine Linse, einen Spiegel; einen Strahlteiler; ein Gitter bzw. Grating, Filter, usf. zumindest teilweise innerhalb des Lochs angeordnet sind. In verschiedenen Beispielen ist es z.B. möglich, dass der Detektor zumindest teilweise in dem Loch angeordnet ist. Der Detektor kann sich also zumindest teilweise in dem Loch erstrecken. Zum Beispiel könnte eine sensitive Fläche bzw. Sensorfläche des Detektors eine Oberfläche aufweisen, die parallel zu der Oberfläche des Trägers orientiert ist. Zum Beispiel könnte das Loch laterale Ausmaße parallel zu der Oberfläche des Trägers aufweisen, welche mit den lateralen Abmessungen der sensitiven Fläche des Detektors korrelieren.

Mittels solcher Techniken ist es möglich, eine besonders platzsparende Implementierung zu gewährleisten. Insbesondere kann es möglich sein, das zweite Beleuchtungsmodul in engem Kontakt mit dem Detektor zu platzieren und derart einen hohen Integrationsgrad zu gewährleisten.

Eine solche Implementierung eines kombinierten zweiten Beleuchtungsmoduls/Detektors kann insbesondere in Bezug auf einen PMT in Transmissionsgeometrie erstrebenswert sein, d.h. für ein Szenario, in dem der Detektor und das zweite Beleuchtungsmodul in Bezug auf das erste Beleuchtungsmodul hinter dem Probenhalter angeordnet ist. Derart kann mittels des Detektors zum Beispiel eine Hellfeld-Fluoreszenzbildgebung erfolgen.

In anderen Beispielen ist es auch möglich, dass das zweite Beleuchtungsmodul nicht im Durchtrittsstrahlengang angeordnet ist, sondern vielmehr in Bezug auf das erste Beleuchtungsmodul vor dem Probenhalter. Zum Beispiel könnte das zweite Beleuchtungsmodul zwischen einer Scanoptik des LSMs und einem Objektiv des LSMs angeordnet sein, z.B. direkt im Strahlengang oder eingespiegelt. Die Scanoptik und das Objekt sind in Bezug auf das erste Beleuchtungsmodul vor dem Probenhalter angeordnet. Derart kann eine effiziente Beleuchtung durch das zweite Beleuchtungsmodul erreicht werden, da die Scanoptik nicht durchlaufen werden muss.

Beispielsweise wäre es möglich, dass das zweite Beleuchtungsmodul in einem Bereich zwischen dem Objektiv und der Scanoptik angeordnet ist, in welchem die Strahlweite des Strahlengangs vergleichsweise gering ist - zum Beispiel in Bezug auf andere Bereiche des Strahlengangs zwischen Scanoptik und Objektiv. Zum Beispiel wäre es möglich, dass das zweite Beleuchtungsmodul im Bereich zwischen dem Objektiv und der Scanoptik nahe oder bei einer Zwischenbildebene angeordnet ist.

Es wäre auch möglich, dass das zweite Beleuchtungsmodul zwischen dem Objektiv und der Scanoptik in den Strahlengang eingespiegelt angeordnet ist. Dazu kann zum Beispiel ein teilreflektiver Spiegel als entsprechende Einkopplung vorgesehen sein, welcher mit dem Strahlengang einen bestimmten Winkel einschließt. Es wäre alternativ oder zusätzlich auch möglich, einen dichroitischen Filter als Einkopplung vorzusehen, beispielsweise wenn unterschiedliche Wellenlängenbereiche ausgenutzt werden.

Der Detektor kann ein Detektionsspektrum aufweisen, welches zumindest teilweise verschieden von einem Emissionsspektrum der Lichtquellen des zweiten Beleuchtungsmoduls ist. Derart kann zum Beispiel im Zusammenhang mit der Fluoreszenzbildgebung erreicht werden, dass eine Beleuchtung des Probenobjekts durch die mehreren Lichtquellen des zweiten Beleuchtungsmodul Fluoreszenz-Prozesse nicht oder nur in einem geringen Maße anregt. Dadurch kann erreicht werden, dass die Fluoreszenzbildgebung durch Beleuchtung mittels der Lichtquellen des zweiten Beleuchtungsmoduls nicht oder nicht signifikant verfälscht wird. Dadurch kann es möglich sein, neben der Fluoreszenzbildgebung auch Phasenkontrastbildgebung zu betreiben, ohne dass die Genauigkeit der Fluoreszenzbildgebung signifikant herabgesetzt wird.

Zum Durchführen der Phasenkontrastbildgebung können in verschiedenen Beispielen die oben beschriebenen Detektoren des LSMs verwendet werden. In anderen Worten kann es möglich sein, dass in verschiedenen Beispielen der oder die Detektoren zur Bildgebung bei Beleuchtung durch das erste Beleuchtungsmodul, als auch zur Bildgebung bei Beleuchtung durch das zweite Beleuchtungsmodul eingesetzt werden. Zum Beispiel kann also ein PMT zur Phasenkontrastbildgebung bei Beleuchtung durch das zweite Beleuchtungsmodul und auf Grundlage von Techniken der winkelselektiven Beleuchtung eingesetzt werden. In einem solchen Beispiel kann es entbehrlich sein, einen dedizierten Detektor für die Techniken der winkelselektiven Beleuchtung vorzusehen; dadurch kann wiederum der benötigte Bauraum reduziert werden.

In anderen Beispielen ist es aber auch möglich, dass das LSM einen weiteren Detektor umfasst. Der weitere Detektor kann derart angeordnet sein, dass er zu Techniken der winkelselektiven Bildgebung eingesetzt werden kann. Z.B. kann der weitere Detektor eine vergleichsweise hohe Auflösung aufweisen, z.B. im Vergleich zu einem PMT. Insbesondere kann der weitere Detektor derart angeordnet sein, dass er zur Bildgebung bei Beleuchtung des Probenobjekts durch das zweite Beleuchtungsmodul verwendet werden kann. Wenn der weitere Detektor keine Fluoresenzsignale detektieren muss, kann eine Sensitivität des weiteren Detektors vergleichsweise gering sein, z.B. im Vergleich zu einem PMT. Dabei ist es zum Beispiel möglich, dass der weitere Detektor ein Detektionsspektrum aufweist, welches zumindest teilweise überlappend mit dem Emissionsspektrum der Lichtquellen des zweiten Beleuchtungsmoduls ist. Zum Beispiel wäre es möglich, dass der weitere Detektor einen CCD-Sensor umfasst. Es wäre alternativ oder zusätzlich auch möglich, dass der weitere Detektor einen CMOS-Sensor umfasst. Der weitere Detektor kann beispielsweise als Kamera betrieben werden. Durch das Vorsehen des weiteren Detektors kann eine in Bezug auf die Phasenkontrastbildgebung optimierte Bilderfassung durchgeführt werden.

In verschiedenen Beispielen kann der weitere Detektor an unterschiedlichsten Positionen positioniert werden. Insbesondere kann die Positionierung des weiteren Detektors in Abhängigkeit von der Positionierung des zweiten Beleuchtungsmoduls variieren. Grundsätzlich wäre es möglich, den weiteren Detektor in Transmissions-Geometrie oder Reflexions-Geometrie in Bezug auf das zweite Beleuchtungsmodul und den Probenhalter zu betreiben. In einem Beispiel wäre es möglich, dass der weitere Detektor zwischen der Scanoptik und dem Objektiv angeordnet ist. Zum Beispiel wäre es möglich, dass der weitere Detektor im Bereich einer Zwischenbildebene angeordnet ist. Z.B. kann für den weiteren Detektor ein Strahlteiler vorgesehen sein, sodass ein entsprechender Strahlengang eingespiegelt wird.

Die verschiedenen Lichtquellen eines Beleuchtungsmoduls können getrennt bzw. gesondert ansteuerbar sein. Dies bedeutet, dass die verschiedenen Lichtquellen z.B. - falls benötigt - durch gesonderte Steuersignale betrieben werden können. In den hierin beschriebenen Beispielen können unterschiedliche Lichtquellen zur Implementierung der winkelselektiven Beleuchtung verwendet werden. Zum Beispiel können die Lichtquellen aus folgender Gruppe ausgewählt sein: organische Leuchtdioden; Festkörper-Leuchtdioden; Leuchtdioden; Halogenlichtquellen; und Laserdioden. Dabei ist es zum Beispiel möglich, dass organische Leuchtdioden und Halogenlichtquellen eine größere laterale Abmessung parallel zu einer Oberfläche des Trägers aufweisen, als die Leuchtdioden. Durch das Bereitstellen des mindestens einen lichtdurchlässigen Bereichs kann eine Flexibilität in Bezug auf die außerhalb des mindestens einen lichtdurchlässigen Bereichs angeordneten Lichtquellen erzielt werden.

In einem Beispiel könnten die Lichtquellen kreisförmig bzw. ringförmig angeordnet sein.

Zum Beispiel können die Lichtquellen in einer Matrix-Struktur angeordnet sein, d.h. mit einer eindimensionalen oder zweidimensionalen Periodizität innerhalb einer durch eine Oberfläche des Trägers definierten Ebene. Die Matrix-Struktur kann einer Gitterstruktur der Anordnung entsprechen. Dabei kann die Matrix-Struktur zum Beispiel eine quadratische, rechtecksförmig, oder mehreckige Einheitszelle der korrespondierenden Gitterstruktur definieren. Durch das Verwenden der Matrix-Struktur kann eine besonders flexible winkelselektive Beleuchtung eingesetzt werden. Derart kann eine besonders aussagekräftige Phasenkontrastbildgebung implementiert werden.

Es wäre z.B. möglich, dass die Lichtquellen auf einer Kuppel-förmigen Oberfläche des Trägers angeordnet sind (Beleuchtungsdom).

In verschiedenen Beispielen kann der Abstand zwischen benachbarten Lichtquellen für die winkelselektive Beleuchtung variieren. Zum Beispiel wäre es möglich, dass die Lichtquellen auf einer Oberfläche des Trägers mit einem geometrischen Füllfaktor angeordnet sind, der nicht größer als 90 % ist, bevorzugt nicht größer als 50 % ist, besonders bevorzugt nicht größer als 30 % ist. Derart kann es möglich sein, dass besonders wenig Licht, welches auf den Träger einfällt, durch die Lichtquellen absorbiert oder reflektiert wird.

Zum Beispiel wäre es möglich, dass der Träger zumindest im lichtdurchlässigen Bereich aus lichtdurchlässigem Material ausgebildet ist, beispielsweise einem Festkörper-Material. Zum Beispiel könnte der Träger zumindest im lichtdurchlässigen Bereich aus Glas ausgebildet sein. Beispielsweise könnte der Träger zumindest im lichtdurchlässigen Bereich aus durchsichtiger Kunstofffolie ausgebildet sein. Beispielsweise könnten die verschiedenen Lichtquellen auf unterschiedlichen Bahnen der Kunstofffolie angeordnet sein. Insbesondere im Zusammenhang mit einem vergleichsweise geringen geometrischen Füllfaktor mit, mit welchem die Lichtquellen auf der Oberfläche des Trägers angeordnet sind, kann durch das Verwenden des lichtdurchlässigen Materials erreicht werden, dass der lichtdurchlässige Bereich jeweils zwischen benachbarten Lichtquellen ausgebildet wird und vergleichsweise groß dimensioniert ist. Derart kann erreicht werden, dass besonders wenig Licht vom auf die Oberfläche des Trägers einfallen Strahlengang reflektiert oder absorbiert wird.

Beispielsweise wäre es möglich, dass die Lichtquellen rotationssymmetrisch in Bezug auf eine zentral angeordnete Achse senkrecht zu einer Oberfläche des Trägers angeordnet sind. Z.B. könnten unterschiedliche Lichtquellen einen unterschiedlichen Abstand zu der Achse aufweisen. Derart kann es möglich sein, in einer zentralen Region des Trägers den lichtdurchlässigen Bereich zu implementieren. Insbesondere kann es möglich sein, den lichtdurchlässigen Bereich vergleichsweise groß zu dimensionieren. Außerdem kann es mittels einer solchen Rotation symmetrischen Anordnung der Lichtquellen möglich sein, die Techniken der winkelselektiven Beleuchtung besonders effizient zu implementieren.

In einem Beispiel wäre es möglich, dass die Lichtquellen außerhalb des lichtdurchlässigen Bereichs auf dem Träger angeordnet sind. In einem solchen Beispiel kann der lichtdurchlässige Bereich durch ein anderes Element als die Lichtquellen ausgebildet werden, beispielsweise wie obenstehend beschrieben durch ein Loch, ein lichtdurchlässiges Festkörper-Material, etc.

In einem weiteren Beispiel wäre es aber auch möglich, dass die Lichtquellen den mindestens einen lichtdurchlässigen Bereich zumindest teilweise ausbilden. Zum Beispiel könnten die Lichtquellen als organische Leuchtdioden implementiert sein, die lichtdurchlässig sind. Dadurch kann es möglich sein, einerseits einen besonders großen mindestens einen lichtdurchlässigem Bereich zu implementieren; während gleichzeitig eine besonders flexible Anordnung der Lichtquellen möglich ist.

Solche obenstehend beschriebenen Mikroskope oder Laser-Scanning-Mikroskope können zur winkelselektiven Beleuchtung verwendet werden. Dadurch kann es möglich sein, ein Phasenkontrast-Bild eines Objekts zu erzeugen (Ergebnisbild).

Bei der winkelselektiven Beleuchtung gemäß der beanspruchten Erfindung werden die Lichtquellen gesondert und/oder sequentiell zur Lichterzeugung angesteuert. Dadurch kann die Beleuchtung eines Objekts aus mehreren Beleuchtungsrichtungen implementiert werden. Das Beleuchten des Objekts aus einer bestimmten Beleuchtungsrichtung umfasst dabei das Ansteuern von mindestens einer Lichtquelle des Beleuchtungsmoduls. Durch das gesonderte und/oder sequentielle Ansteuern der Lichtquellen kann eine Trennung der Abbildung des Objekts für die unterschiedlichen Beleuchtungsrichtungen in entsprechenden Messbildern erfolgen. Bei der sequentiellen Beleuchtung des Objekts können die verschiedenen Messbilder auch sequentiell erfasst werden; dadurch wird eine Trennung der Beleuchtungsrichtungen im Zeitraum bewirkt. Alternativ oder zusätzlich kann auch eine Trennung der Beleuchtungsrichtungen durch Verwendung unterschiedlicher Spektralbereiche des Lichts für die verschiedenen Beleuchtungsrichtungen erzielt werden. Alternativ oder zusätzlich kann auch eine Trennung der Beleuchtungsrichtungen durch Verwendung unterschiedlicher Polarisationen des Lichts für verschiedene Beleuchtungsrichtungen erzielt werden. In solchen Fällen können entsprechende Messbilder auch zumindest teilweise zeitparallel erfasst werden, die Trennung kann durch das Vorhalten entsprechender Farb-Filter und/oder Polarisations-Filter erfolgen. Single-Shot Messungen können möglich sein.

Erfindungsgemäß umfasst ein entsprechendes Laser-Scanning-Mikroskop eine Recheneinheit die eingerichtet ist, um die mehreren Lichtquellen zum gesonderten und/oder sequentiellen Beleuchten eines Objekts aus mehreren Beleuchtungsrichtungen anzusteuern. Die Recheneinheit kann weiterhin eingerichtet sein, um mehrere mit den Beleuchtungsrichtungen assoziierte Messbilder zum Erhalten eines Ergebnisbilds, das einen Phasenkontrast aufweist, zu kombinieren.

Erfindungsgemäß umfasst das Beleuchtungsmodul einen Träger. Der Träger kann einen lichtdurchlässigen Bereich aufweisen. Das Beleuchtungsmodul umfasst auch mehrere Lichtquellen, die auf dem Träger angeordnet sind.

Gemäß einem weiteren erfindungsgemäßen Beispiel umfasst das Beleuchtungsmodul einen Träger, mehrere Lichtquellen, die auf dem Träger angeordnet sind, und mindestens einen Detektor, der auf dem Träger aufgebracht ist. Zum Beispiel kann ein Emissionsspektrum der mehreren Lichtquellen zumindest teilweise überlappend mit einem Detektionsspektrum des mindestens einen Detektors sein. Zum Beispiel wäre es möglich, dass der mindestens eine Detektor zentral oder dezentral auf dem Träger angebracht ist.

Erfindungsgemäß weist der mindestens eine Detektor einen Abstand von einem Zentrum des Trägers auf, wobei zwischen dem Zentrum des Trägers und dem mindestens einen Detektor zumindest eine Lichtquelle des Moduls angeordnet ist.

### KURZE BESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

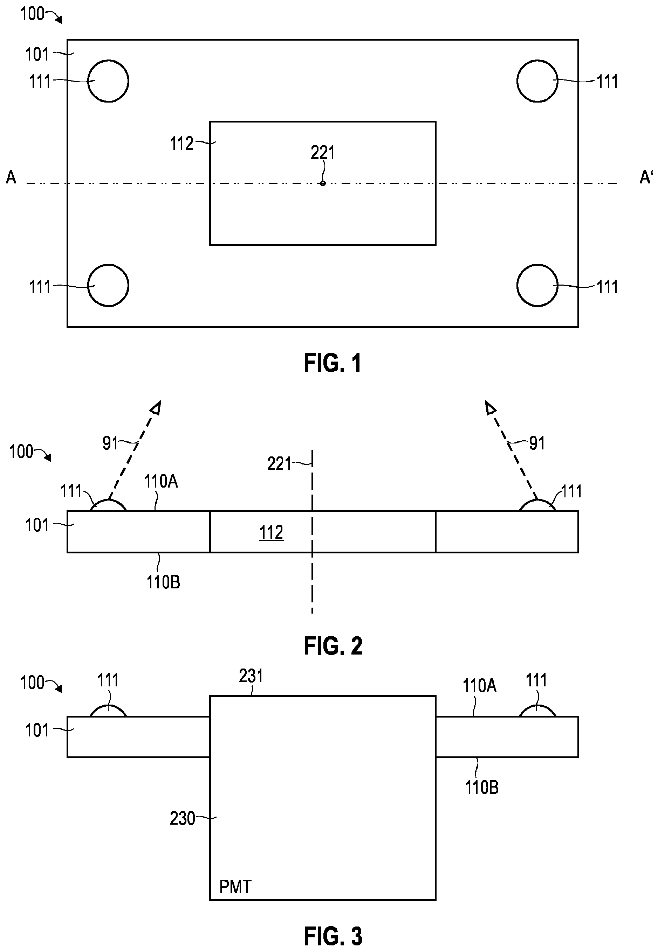

FIG. 1 ist eine schematische Aufsicht auf ein Beleuchtungsmodul zur winkelselektiven Beleuchtung und mit einem Träger, der einen lichtdurchlässigen Bereich gemäß verschiedener Ausführungsformen aufweist.
FIG. 2 ist eine schematische Seitenansicht des Beleuchtungsmoduls zur winkelselektiven Beleuchtung gemäß FIG. 1.
FIG. 3 ist eine schematische Seitenansicht des Beleuchtungsmoduls zur winkelselektiven Beleuchtung gemäß FIG. 1, wobei in dem Beispiel der FIG. 3 ein Detektor teilweise in dem Loch angeordnet ist.

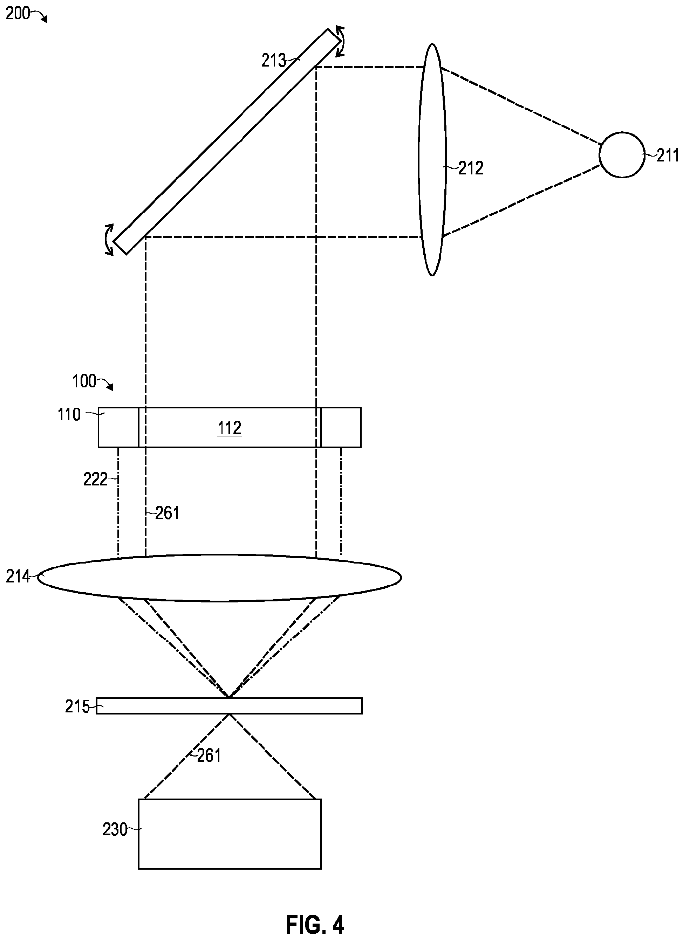

FIG. 4 illustriert schematisch ein LSM gemäß verschiedener Ausführungsformen, wobei in dem Beispiel der FIG. 4 das Beleuchtungsmodul zur winkelselektiven Beleuchtung und mit dem Träger im Bereich zwischen einer Scanoptik des LSMs und einem Objektiv des LSMs im Strahlengang einer Laserlichtquelle des LSMs angeordnet ist.

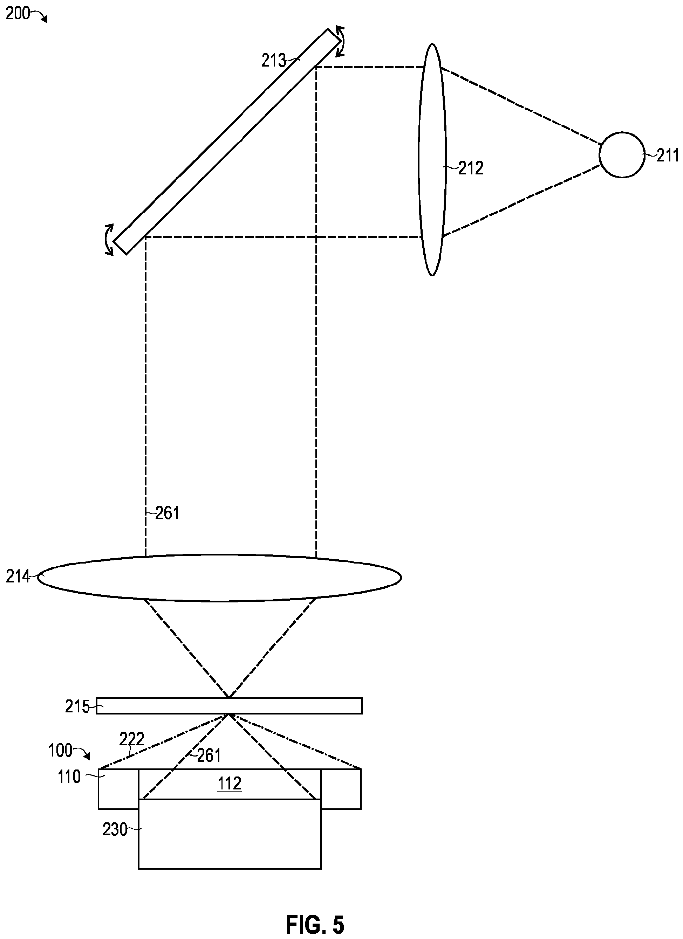

FIG. 5 illustriert schematisch ein LSM gemäß verschiedener Ausführungsformen, wobei in dem Beispiel der FIG. 5 das Beleuchtungsmodul zur winkelselektiven Beleuchtung und mit dem Träger in Bezug auf die Laserlichtquelle des LSMs hinter einem Probenhalter des LSMs in einem Durchtrittsstrahlengang angeordnet ist, wobei in dem Beispiel der FIG. 5 weiterhin der Detektor teilweise in dem zentral auf dem Träger angeordneten Loch ausgebildet ist.

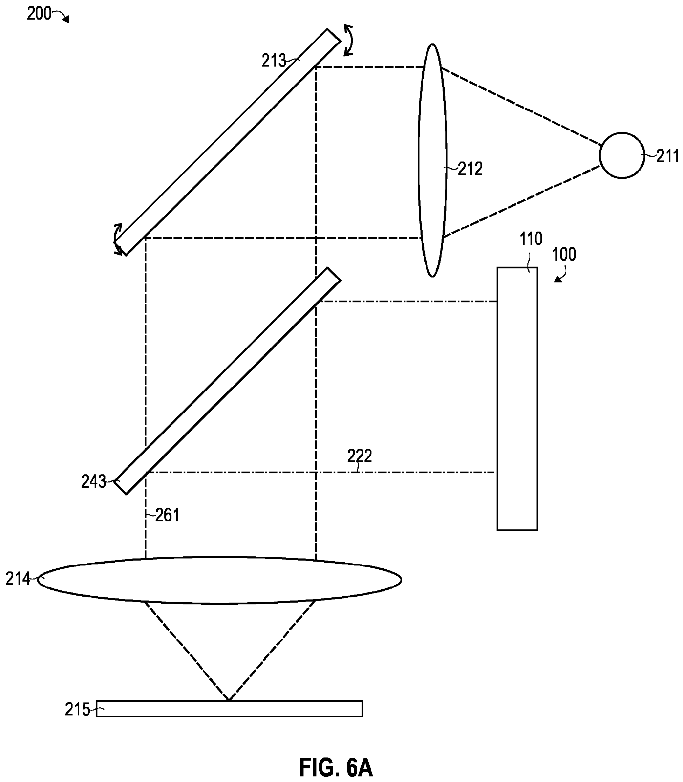

FIG. 6A illustriert schematisch ein LSM gemäß verschiedener, nicht unter die beanspruchte Erfindung fallender Ausführungsformen, wobei in dem Beispiel der FIG. 6A das Beleuchtungsmodul zur winkelselektiven Beleuchtung und mit dem Träger im Bereich zwischen einer Scanoptik des LSMs und einem Objektiv des LSMs in den Strahlengang der Laserlichtquelle eingespiegelt angeordnet ist.

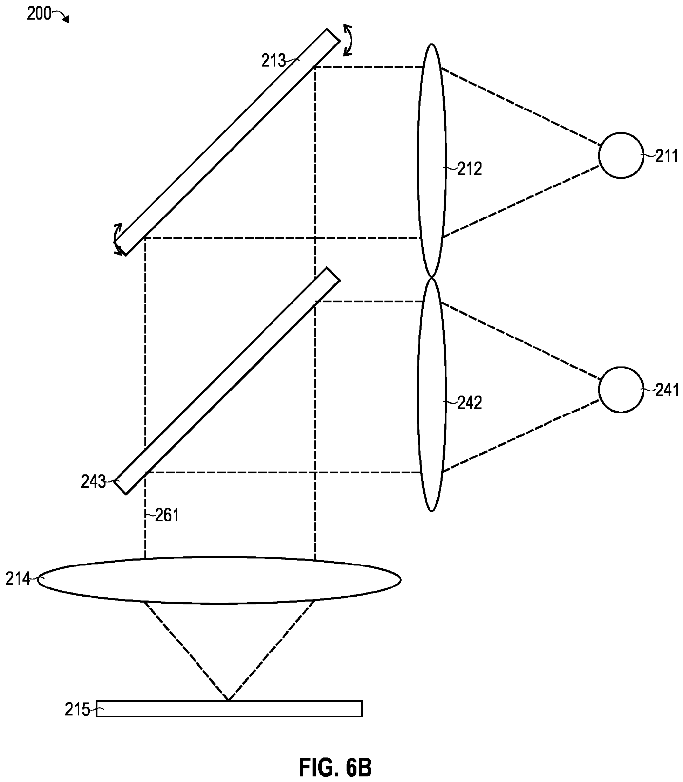

FIG. 6B illustriert schematisch ein LSM gemäß verschiedener Ausführungsformen, wobei in dem Beispiel der FIG. 6B ein weiterer Detektor zwischen der Scanoptik und dem Objektiv des LSMs eingespiegelt angeordnet ist, wobei der weitere Detektor zur Bildgebung eines Probeobjekts bei Beleuchtung durch das Beleuchtungsmodul zur winkelselektiven Beleuchtung eingerichtet ist.

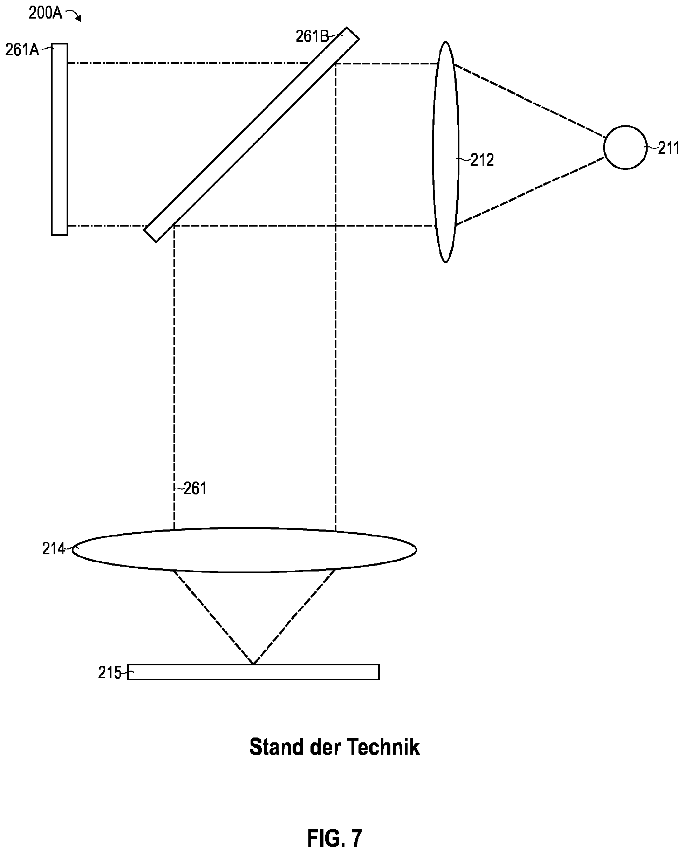

FIG. 7 illustriert schematisch ein herkömmliches LSM, das ein Beleuchtungsmodul mit Halogenlichtquelle für die Phasenkontrast-Bildgebung umfasst.

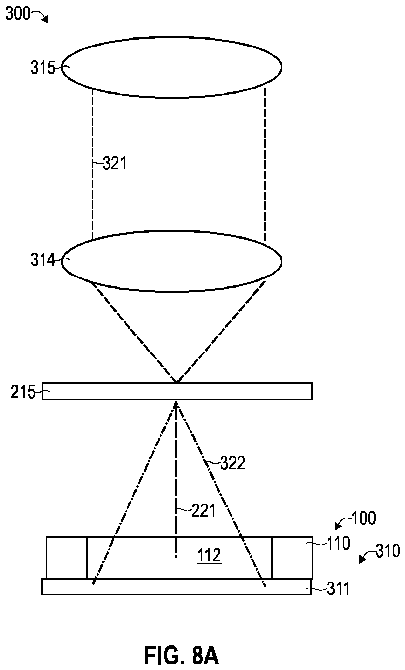

FIG. 8A illustriert schematisch ein Mikroskop, welches nicht unter die beanspruchte Erfindung fällt, dessen Merkmale aber zum besseren Verständnis der Erfindung beitragen können, mit Kamera gemäß verschiedener Ausführungsformen, wobei in einem der Kamera zugeordneten Durchtrittsstrahlengang das Beleuchtungsmodul zur winkelselektiven Beleuchtung angeordnet ist.

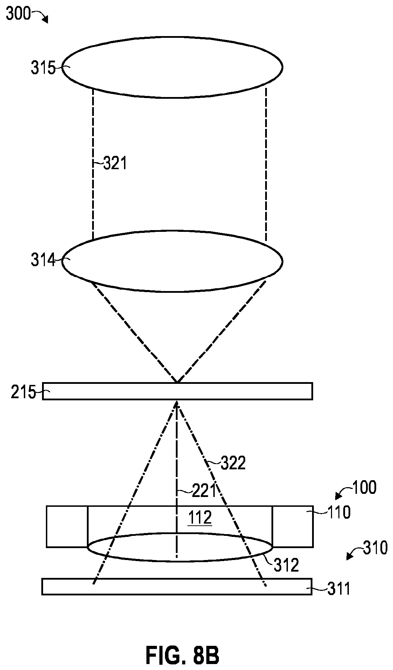

FIG. 8B illustriert schematisch ein Mikroskop, welches nicht unter die beanspruchte Erfindung fällt, dessen Merkmale aber zum besseren Verständnis der Erfindung beitragen können, mit Kamera gemäß verschiedener Ausführungsformen, wobei in einem der Kamera zugeordneten Durchtrittsstrahlengang das Beleuchtungsmodul zur winkelselektiven Beleuchtung angeordnet ist.

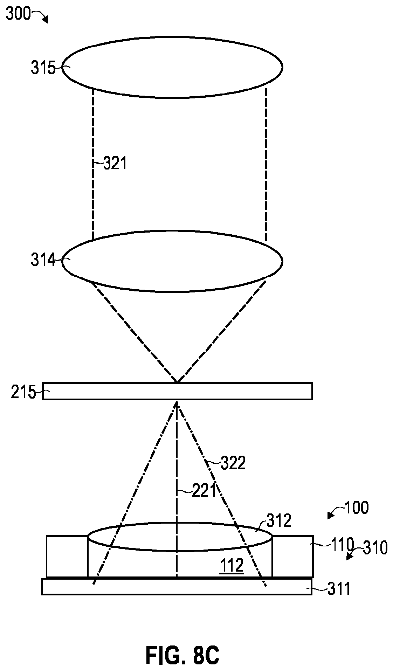

FIG. 8C illustriert schematisch ein Mikroskop, welches nicht unter die beanspruchte Erfindung fällt, dessen Merkmale aber zum besseren Verständnis der Erfindung beitragen können, mit Kamera gemäß verschiedener Ausführungsformen, wobei in einem der Kamera zugeordneten Durchtrittsstrahlengang das Beleuchtungsmodul zur winkelselektiven Beleuchtung angeordnet ist.

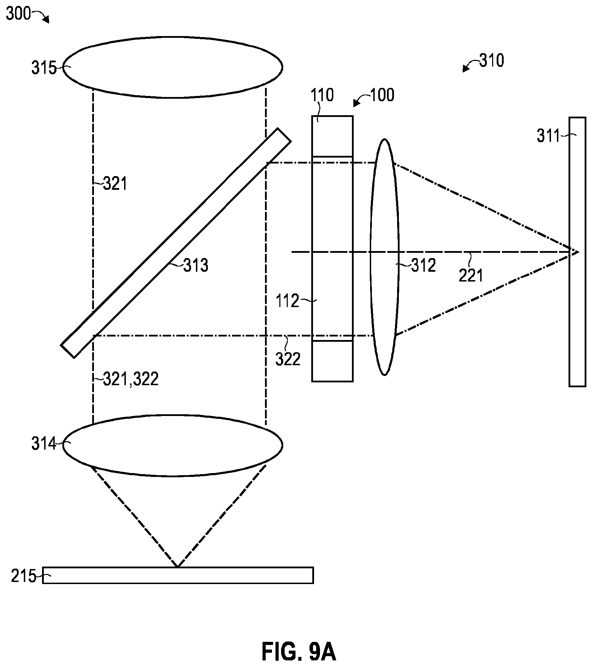

FIG. 9A illustriert schematisch ein Mikroskop, welches nicht unter die beanspruchte Erfindung fällt, dessen Merkmale aber zum besseren Verständnis der Erfindung beitragen können, gemäß verschiedener Ausführungsformen, wobei in einem der Kamera zugeordneten Strahlengang das Beleuchtungsmodul zur winkelselektiven Beleuchtung angeordnet ist.

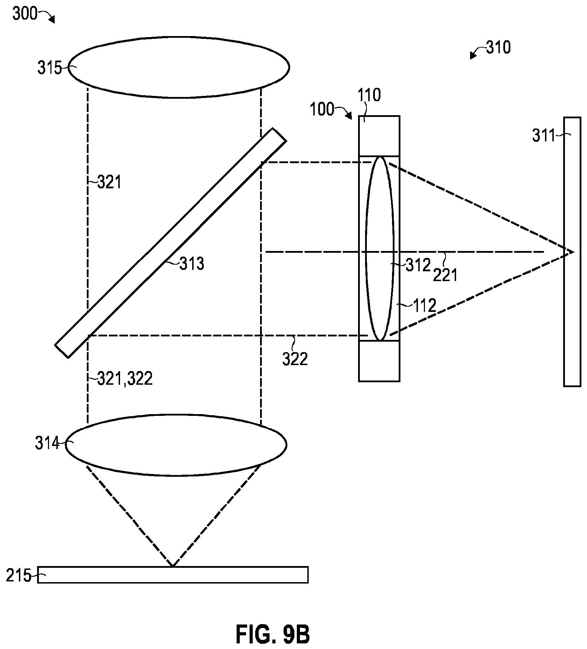

FIG. 9B illustriert schematisch ein Mikroskop, welches nicht unter die beanspruchte Erfindung fällt, dessen Merkmale aber zum besseren Verständnis der Erfindung beitragen können, gemäß verschiedener Ausführungsformen, wobei in einem der Kamera zugeordneten Strahlengang das Beleuchtungsmodul zur winkelselektiven Beleuchtung angeordnet ist und im Bereich eines zentral auf dem Träger angeordneten Lochs eine Abbildungsoptik angeordnet ist.

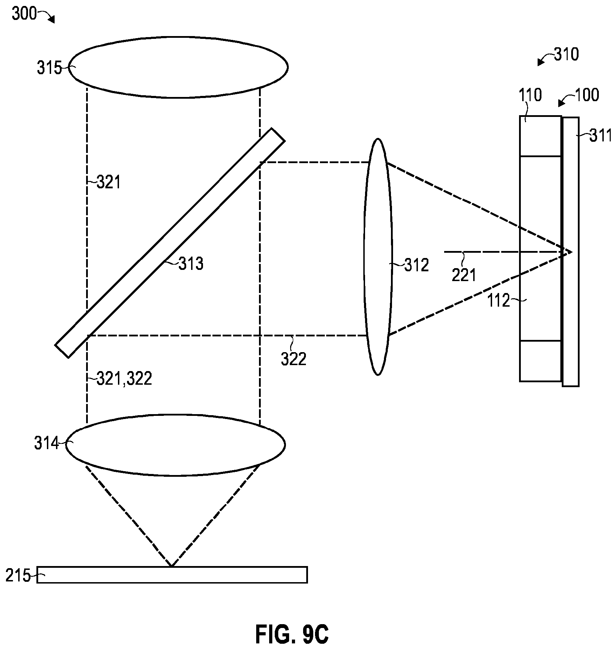

FIG. 9C illustriert schematisch ein Mikroskop, welches nicht unter die beanspruchte Erfindung fällt, dessen Merkmale aber zum besseren Verständnis der Erfindung beitragen können, gemäß verschiedener Ausführungsformen, wobei in einem der Kamera zugeordneten Strahlengang das Beleuchtungsmodul zur winkelselektiven Beleuchtung angeordnet ist und die Kamera mit dem Beleuchtungsmodul gekoppelt ist.

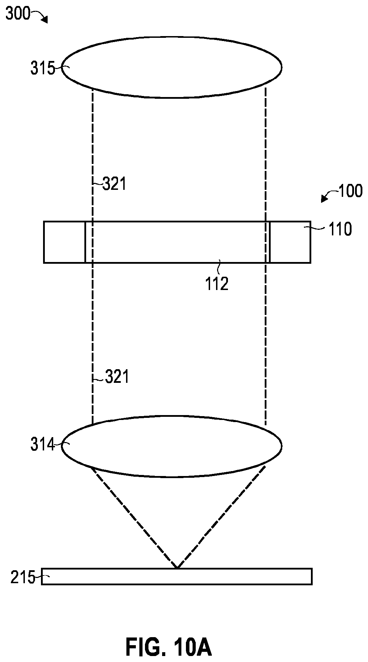

FIG. 10A illustriert schematisch ein Mikroskop, welches nicht unter die beanspruchte Erfindung fällt, dessen Merkmale aber zum besseren Verständnis der Erfindung beitragen können, gemäß verschiedener Ausführungsformen, wobei in einem Detektionsstrahlengang das Beleuchtungsmodul zur winkelselektiven Beleuchtung angeordnet ist.

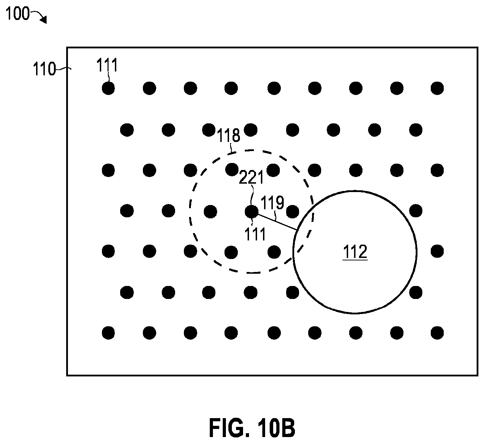

FIG. 10B illustriert schematisch das Beleuchtungsmodul zur winkelselektiven Beleuchtung und mit dem Träger und den mehreren Lichtquellen gemäß verschiedener Ausführungsformen, wobei der lichtdurchlässige Bereich als dezentral auf dem Träger angeordnetes Loch ausgebildet ist.

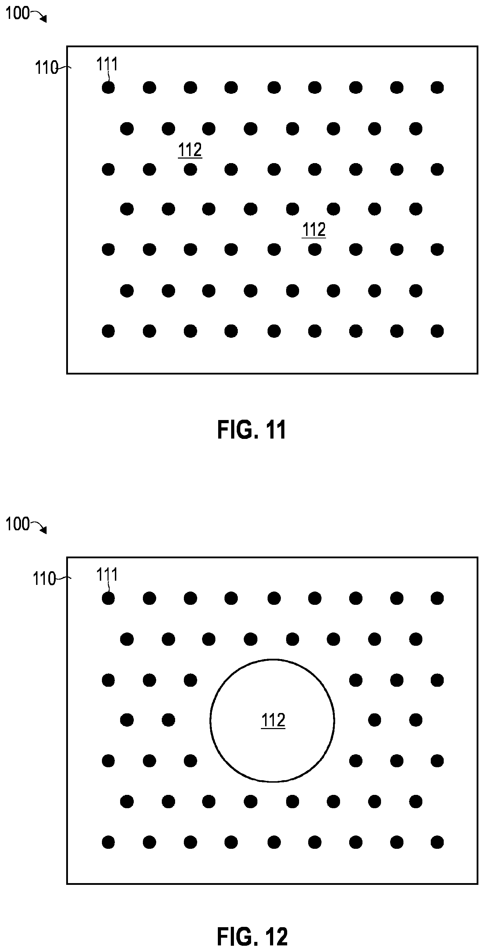

FIG. 11 illustriert schematisch das Beleuchtungsmodul zur winkelselektiven Beleuchtung gemäß verschiedener Ausführungsformen, wobei der Träger des Beleuchtungsmoduls aus lichtdurchlässigem Material ausgebildet ist und die Lichtquellen des Beleuchtungsmoduls auf der Oberfläche des Trägers mit einem geringen geometrischen Füllfaktor angeordnet sind.
FIG. 12 illustriert schematisch das Beleuchtungsmodul zur winkelselektiven Beleuchtung, wobei der lichtdurchlässige Bereich des Beleuchtungsmoduls als zentral auf dem Träger angeordnetes Loch ausgebildet ist, was nicht unter die beanspruchte Erfindung fällt.

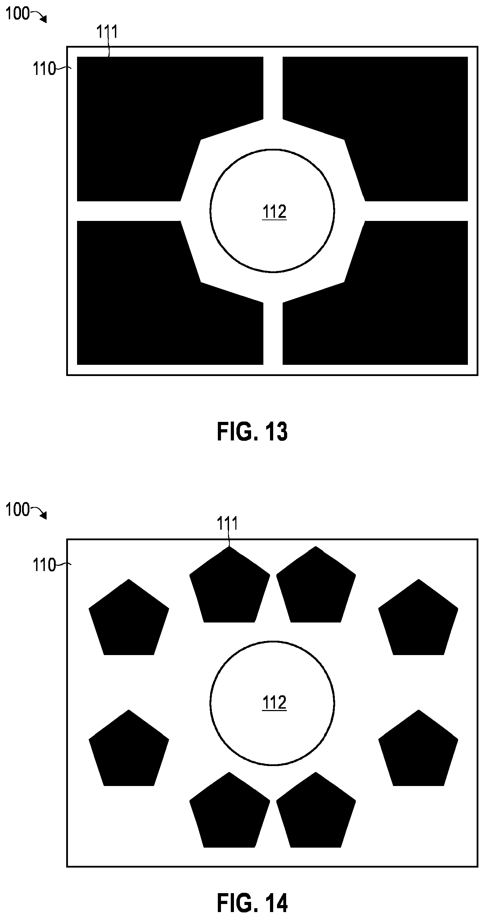

FIG. 13 illustriert schematisch das Beleuchtungsmodul zur winkelselektiven Beleuchtung, wobei die mehreren Lichtquellen des Beleuchtungsmoduls durch organische Leuchtdioden implementiert sind, wobei das Beleuchtungsmodul ein zentrales Loch aufweist, was nicht unter die Erfindung fällt.
FIG. 14 illustriert schematisch das Beleuchtungsmodul zur winkelselektiven Beleuchtung, wobei die mehreren Lichtquellen durch Halogenlichtquellen implementiert sind, wobei das Beleuchtungsmodul ein zentrales Loch aufweist, was nicht unter die Erfindung fällt.

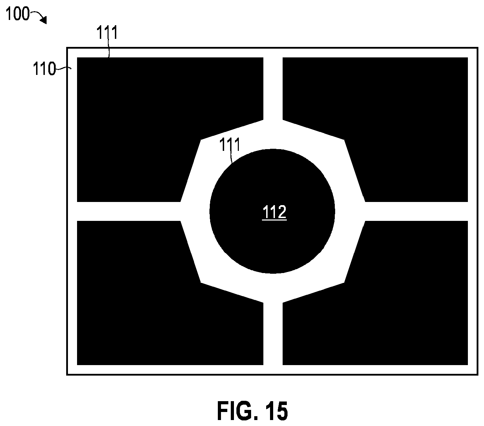

FIG. 15 illustriert schematisch das Beleuchtungsmodul zur winkelselektiven Beleuchtung gemäß verschiedener Ausführungsformen, wobei der lichtdurchlässige Bereich und die mehreren Lichtquellen durch organische Leuchtdioden implementiert sind, wobei das Beleuchtungsmodul ein zentrales Loch aufweist, was nicht unter die Erfindung fällt.

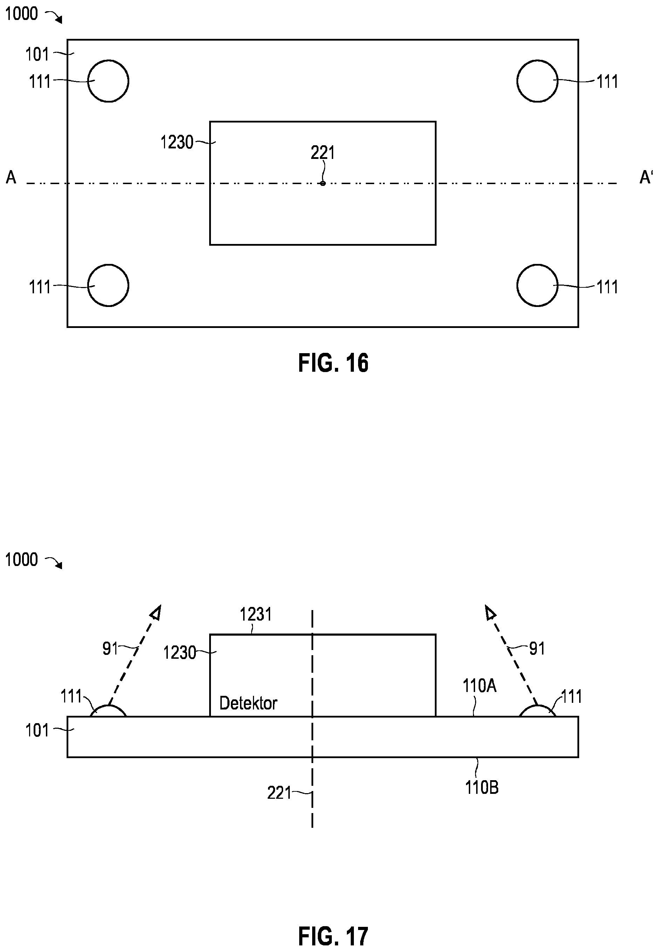

FIG. 16 ist eine schematische Aufsicht auf ein Beleuchtungsmodul zur winkelselektiven Beleuchtung und mit einem Träger, auf dem gemäß verschiedener Ausführungsformen ein Detektor angebracht ist, wobei im Unterschied zur beanspruchten Erfindung der Träger keinen lichtdurchlässigen Bereich aufweist und der Detektor zentral auf dem Träger angeordnet ist.
FIG. 17 ist eine schematische Seitenansicht des Beleuchtungsmoduls zur winkelselektiven Beleuchtung gemäß FIG. 16.

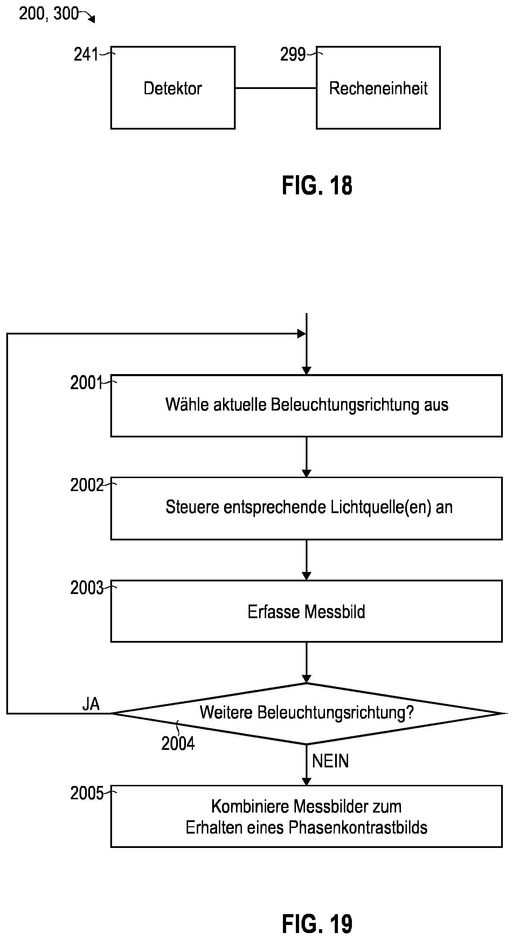

FIG. 18 illustriert schematisch eine optische Vorrichtung gemäß verschiedener Ausführungsformen mit einem Detektor und einer Recheneinheit.
FIG. 19 ist ein Flussdiagramm eines Verfahrens gemäß verschiedener Ausführungsformen.

### DETAILLIERTE BESCHREIBUNG VON AUSFÜHRUNGSFORMEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird.

Nachfolgend werden Techniken in Bezug auf ein Beleuchtungsmodul beschrieben, welches für die winkelselektive Beleuchtung eines Probenobjekts eingesetzt werden kann. Das Beleuchtungsmodul umfasst mehrere Lichtquellen, die zueinander beabstandet angeordnet sind und kann dadurch Beleuchtung eines Probenobjekts aus mehreren Beleuchtungsrichtungen implementieren. Messbilder, die den einzelnen Beleuchtungsrichtungen entsprechen, können dann miteinander kombiniert werden. Dadurch kann durch digitale Nachbearbeitung ein Ergebnisbild erhalten werden, das einen Phasenkontrast aufweist.

Dabei betreffen verschiedene Beispiele, die besonders flexible Kombination eines solchen Beleuchtungsmoduls zur winkelselektiven Beleuchtung mit optischen Vorrichtungen unterschiedlicher Ausgestaltung. In verschiedenen Beispielen wird beschrieben, wie ein solches Beleuchtungsmodul mit einem LSM kombiniert werden kann. In weiteren Beispielen wird beschrieben, wie ein solches Beleuchtungsmodul mit einem Auflichtmikroskop oder Durchlichtmikroskop kombiniert werden kann.

Zum Beispiel wird in verschiedenen Beispielen beschrieben, wie ein solches Beleuchtungsmodul mit einer Laserlichtquelle eines LSMs kombiniert werden kann. Dabei könnte das Beleuchtungsmodul mit einem in Transmissionsgeometrie angeordneten PMT, der eingerichtet ist, um ein Fluoreszenzsignal eines entsprechenden Probenobjekts zu detektieren, strukturell verbunden oder gekoppelt werden. Dazu kann das Beleuchtungsmodul z.B. einen lichtdurchlässigen Bereich aufweisen, durch den Licht hin zu dem Detektor hindurchtreten kann. Zum Beispiel könnte das Beleuchtungsmodul durch einen Träger mit einer zentral angeordneten Aussparung/Loch, welches nicht unter die beanspruchte Erfindung fällt, als lichtdurchlässiger Bereich implementiert werden, dann kann es möglich sein, den PMT zumindest teilweise in dem Loch anzuordnen. Dabei ist es zum Beispiel auch möglich, dass das Emissionsspektrum der Lichtquellen des Beleuchtungsmoduls verschieden von dem Detektionsspektrum des PMTs ist. Dabei kann das Detektionsspektrum des PMT abgestimmt sein auf die Wellenlänge einer Laserlichtquelle und/oder auf die Wellenlänge eines Fluoreszenzsignals; das Emissionsspektrum der Lichtquellen des Beleuchtungsmoduls kann zum Beispiel im infraroten Spektralbereich liegen.

In weiteren Beispielen wäre es zum Beispiel möglich, dass das Beleuchtungsmodul einen gelochten Träger aufweist, wobei in dem Loch oder in den Löchern keine weiteren optischen Elemente angeordnet sind. In anderen Beispielen können unterschiedliche optische Elemente im Bereich des mindestens einen Lochs angeordnet sein, beispielsweise eine Linse, eine Bertrand-Linse mit winkelselektiver Abschattung, ein Gitter, etc.

In verschiedenen Beispielen kann es möglich sein, das Beleuchtungsmodul mit einem optischen Mikroskop, welches nicht unter die beanspruchte Erfindung fällt, aber dessen Merkmale mit der Erfindung kombiniert werden können, zu kombinieren. Dabei kann das Beleuchtungsmodul beispielsweise in einem Detektionsstrahlengang oder einem weiteren Strahlengang des Beleuchtungsmoduls angeordnet sein, wobei der weitere Strahlengang zumindest teilweise verschieden von dem Detektionsstrahlengang sein kann. In verschiedenen Beispielen ist es möglich, ein solches Beleuchtungsmodul mit einer Übersichtskamera zu kombinieren. Die Übersichtskamera kann zum Beispiel eingerichtet sein, um ein Übersichtsbild eines Probenhalters des Mikroskops zu erfassen. Ein entsprechender, mit der Kamera assoziierter Strahlengang kann deshalb eine vergleichsweise geringere Vergrößerung aufweisen.

Das Mikroskop kann zum Beispiel ein herkömmliches Auflichtmikroskop oder Durchlichtmikroskop sein. Solche Techniken können insbesondere im Zusammenhang mit der Weitfeldmikroskopie angewendet werden, bei welcher ein Übersichtsbild eines Probenobjekts erstellt wird und basierend auf dem Übersichtsbild eine Feinpositionierung stattfindet.

Die individuelle Ausgestaltung und Anordnung der Lichtquellen eines solchen Beleuchtungsmoduls zur winkelselektiven Beleuchtung kann in unterschiedlichen Beispielen variieren. Zum Beispiel könnte ein LED-Array als entsprechende Matrix-Struktur verwendet werden. In anderen Beispielen könnten auch Lichtquellen mit einer vergleichsweise großen lateralen Ausdehnung verwendet werden, wie beispielsweise Halogenlichtquellen oder organische Leuchtdioden. Diese könnten zum Beispiel in unterschiedlichen Quadranten auf dem Träger in Bezug auf ein zentral angeordnetes Loch, welches nicht unter die beanspruchte Erfindung fällt und das den lichtdurchlässigen Bereich ausbildet, angeordnet sein. Es ist optional auch möglich, dass organische Leuchtdioden selbst lichtdurchlässig ausgestaltet sind und derart den lichtdurchlässigen Bereich implementieren.

In verschiedenen Beispielen ist es entbehrlich, dass das Beleuchtungsmodul einen lichtdurchlässigen Bereich aufweist. Z.B. wäre es in solchen Beispielen möglich, dass das Beleuchtungsmodul einen durchgängigen Träger aufweist, der nicht lichtdurchlässig ist. Z.B. wäre es hier möglich, dass mindestens ein Detektor auf dem Träger aufgebracht ist, beispielsweise aufgeklebt ist. Z.B. könnte der Detektor zentral oder, gemäß der beanspruchten Erfindung, dezentral auf dem Träger aufgebracht sein.

Mittels solcher Techniken können unterschiedliche Effekte erzielt werden. Zum Beispiel kann es möglich sein, unterschiedliche Bildgebungstechniken miteinander zu kombinieren. Zum Beispiel können herkömmliche, analoge Bildgebungstechniken - wie beispielsweise die analoge, optische Auflichtmikroskopie oder die analoge, optische Durchlichtmikroskopie oder die Fluoreszenz-Bildgebung - mit Techniken kombiniert werden, die auf einer digitalen Nachbearbeitung basieren. Außerdem ist es möglich Techniken der Fluoreszenz-Bildgebung mit Techniken der Nicht-Fluoreszenz-Bildgebung zu kombinieren. Digitale Techniken im Zusammenhang mit der winkelselektiven Beleuchtung können zum Beispiel - wie im Zusammenhang mit DE 10 2014 112 242 A1 beschrieben - eine vollautomatische oder zumindest teilautomatische Erzeugung eines passenden Kontrasts ermöglichen. Solche Techniken können daher auch ohne tiefgehendes Expertenwissen ausgeführt werden. Insbesondere im Zusammenhang mit der Fluoreszenz-Bildgebung kann durch Verwenden geeigneter Emissionsspektren der Lichtquellen des Beleuchtungsmoduls vermieden werden, dass biologische Probenobjekte durch die Techniken der winkelselektiven Beleuchtung verbraucht werden und dadurch die Fluoreszenz-Bildgebung leidet. Darüber hinaus ist es möglich, optische Vorrichtungen zu implementieren, welche wie oben beschrieben unterschiedliche Bildgebungstechniken kombinieren, dafür jedoch ein gemeinsames Objektiv verwenden. Dies spart Bauraum, reduziert Kosten und Komplexität. Zum Beispiel kann es mittels der Techniken der winkelselektiven Beleuchtung möglich sein, Phasenkontrast Bilder zu erzeugen; hierbei kann es entbehrlich sein, spezielle Differenzielle Phasenkontrast (DIC)-Optik oder Zernike-Optik vorzusehen.

FIG. 1 illustriert ein beispielhaftes Beleuchtungsmodul 100. FIG. 1 ist eine Aufsicht auf das Beleuchtungsmodul 100. Das Beleuchtungsmodul 100 umfasst einen Träger 101. Zum Beispiel kann der Träger 101 als massive Platte ausgestaltet sein. Der Träger 101 kann aus durchsichtigem, das heißt lichtdurchlässigem Material wie z.B. Glas oder Kunststoff ausgebildet sein oder kann aus nicht-lichtdurchlässigem Material ausgebildet sein. Zum Beispiel könnte der Träger 101 aus Metall hergestellt sein, zum Beispiel aus Stahl oder Aluminium. Der Träger kann als Platte ausgebildet sein.

Auf dem Träger 101 sind in dem Beispiel der FIG. 1 insgesamt vier Lichtquellen 111 versetzt gegenüber einem geometrischen Zentrum, das einer Achse 221 entspricht, angeordnet. Die Lichtquellen 111 sind in unterschiedlichen Richtungen in Bezug auf die Achse 221 angeordnet. Die Lichtquellen 111 sind insbesondere in unterschiedlichen Quadranten in Bezug auf die Achse 221 angeordnet. Zum Beispiel können die Lichtquellen 111 durch Leuchtdioden implementiert sein. Es können auch andere Arten von Lichtquellen 111 verwendet werden. Aus FIG. 1 ist ersichtlich, dass die Lichtquellen 111 an unterschiedlichen Positionen in Bezug auf das geometrische Zentrum des Trägers 101 angeordnet sind. Dadurch kann die winkelselektive Beleuchtung implementiert werden, z.B. in einem Szenario in welchem die zentrale Achse 221 entlang eines Zentralstrahls eines Strahlengangs einer optischen Vorrichtung, die das Beleuchtungsmodul 100 aufnimmt, verläuft. Insbesondere sind die Lichtquellen 111 rotationssymmetrisch in Bezug auf die zentrale Achse 221 angeordnet. Dies kann hilfreich sein, wenn die winkelselektive Beleuchtung für stark unterschiedliche Richtungen implementiert werden soll, z.B. um einen besonders starken Phasenkontrast zu erzeugen.

Im Bereich des geometrischen Zentrums des Trägers 101 ist ein lichtdurchlässiger Bereich 112 angeordnet. In einem Beispiel kann der lichtdurchlässige Bereich 112 durch lichtdurchlässiges Festkörper-Material implementiert werden; Beispiele für lichtdurchlässiges Material wären zum Beispiel: Glas; Kunstoff; Kunstoff-Folie; etc. Das lichtdurchlässige Material kann zum Beispiel in das umgebende Material des Trägers 101 eingebettet sein und fest mit diesem verbunden sein. Z.B. könnte der lichtdurchlässige Bereich 112 als Glasplatte implementiert sein, die in den metallischen Träger eingebettet ist. In einem weiteren Beispiel kann der lichtdurchlässige Bereich 112 durch eine Aussparung bzw. ein Loch implementiert sein.

Während in Bezug auf das Beispiel der FIG. 1 ein einzelner, zusammenhängender lichtdurchlässiger Bereich 112 dargestellt ist, kann es in anderen Beispielen möglich sein, mehr als einen lichtdurchlässigen Bereich vorzusehen. Z.B. könnten mehrere, voneinander getrennte Löcher vorgesehen sein. Dabei können entsprechende Techniken wie obenstehend in Bezug auf FIG. 1 erläutert angewendet werden.

Durch den lichtdurchlässigen Bereich kann erreicht werden, dass das Beleuchtungsmodul 100 besonders flexibel mit einer optischen Vorrichtung kombiniert werden kann. Zum Beispiel kann es möglich sein, dass das Beleuchtungsmodul 100 innerhalb des Strahlengangs der optischen Vorrichtung angeordnet wird; dann kann Licht entlang des Strahlengangs durch das Beleuchtungsmodul 100 durch den lichtdurchlässigen Bereich 112 hindurch treten. Derart kann das Beleuchtungsmodul 100 flexibel in die optische Vorrichtung integriert werden.

FIG. 2 ist eine Seiten-Schnittansicht des Beleuchtungsmoduls 100 aus FIG. 1 entlang der gestrichelt-zweifach gepunkteten Linie A-A' in FIG. 1. In FIG. 2 sind die Oberflächen 110A, 110B des Trägers 101 dargestellt. In FIG. 2 ist insbesondere eine Oberseite 110A und eine Unterseite 110B des Trägers 110 dargestellt. Die Oberseite 110A und die Unterseite 110B sind eben ausgestaltet; in anderen Beispielen könnten diese auch eine nicht-ebene Form aufweisen.

Aus FIG. 2 ist ersichtlich, dass zum Beispiel von oben oder unten einfallendes Licht entlang der zentralen Achse 221 ohne signifikante Reflexion oder Absorption durch das Beleuchtungsmodul 100 im Bereich des lichtdurchlässigem Bereichs 112 hindurchtreten kann. Deshalb ist es möglich, das Beleuchtungsmodul 100 flexibel mit verschiedenen optischen Vorrichtungen wie beispielsweise einem LSM oder einem herkömmlichen Auflichtmikroskop oder Durchlichtmikroskop zu kombinieren. Insbesondere kann es möglich sein, das Beleuchtungsmodul 100 im Strahlengang einer optischen Vorrichtung anzuordnen.

In FIG. 2 sind auch die jeweils mit den Lichtquellen 111 assoziierten Beleuchtungsrichtungen 91 dargestellt.

FIG. 3 illustriert Aspekte in Bezug auf das Anordnen eines Detektors 230 im lichtdurchlässigen Bereich, der als zentral auf dem Träger 110 angeordnetes Loch ausgebildet ist. Für ein Beispiel, in dem der lichtdurchlässigem Bereich 112 als Loch ausgebildet ist, ist es möglich, andere optisch wirksame Elemente, wie beispielsweise einen Detektor 230, zumindest teilweise in dem Loch anzuordnen. Ein solches Szenario ist in FIG. 3 gezeigt. In dem Beispiel der FIG. 3 ist ein PMT, der zum Beispiel eingerichtet sein kann, um ein Fluoreszenzsignal eines biologischen Probenobjekts zu detektieren, im Bereich des Lochs, welches den lichtdurchlässigen Bereich 112 implementiert, angeordnet. Insbesondere ist eine sensitive Fläche 231 des Detektors 230 gegenüber der Oberseite 110A beabstandet; dies bedeutet, dass der Detektor 230 über die Oberseite 110A entlang der Achse 221 hinausragt. Dadurch kann erreicht werden, dass von oben einfallendes Licht durch den Detektor 230 ohne große Verluste aufgrund des Beleuchtungsmoduls 100 detektiert werden kann.

FIG. 4 illustriert Aspekte in Bezug auf ein LSM 200. Das LSM 200 umfasst ein erstes Beleuchtungsmodul 211, das eine Laserlichtquelle aufweist. Die Laserlichtquelle definiert einen ersten Strahlengang 261 (in FIG. 4 gestrichelt dargestellt). Eine Kollimator-Optik 212 ist vorgesehen. Eine Scanoptik 213 ist im Strahlengang 261 angeordnet. Ein Objektiv 214 ist nahe bei einem Probenhalter 215 angeordnet. Die Scanoptik 213 und das Objektiv 214 sind in Bezug auf das erste Beleuchtungsmodul 211 vor dem Probenhalter 215 und direkt im Strahlengang 261 angeordnet. Der Probenhalter 215 ist eingerichtet, ein Probenobjekt im Strahlengang 261 zu fixieren. Das LSM 200 umfasst auch einen Detektor 230, z.B. einen PMT. Der Detektor 230 ist geeignet, um ein Fluoreszenzsignal des Probenobjekts zu detektieren.

In dem Beispiel der FIG. 4 ist der Detektor 230 in Bezug auf das Beleuchtungsmodul 211 hinter dem Probenhalter 215 angeordnet, d.h. im Durchtrittsstrahlengang 221. In anderen Beispielen könnte der Detektor 230 in Bezug auf das Beleuchtungsmodul 211 auch vor dem Probenhalter 215 angeordnet sein. Dazu könnte eine Auskopplung in Bezug auf den Strahlengang 261 vorgesehen sein, zum Beispiel in Form eines teilreflektiven Spiegels als Strahlteiler (in FIG. 4 nicht dargestellt).

FIG. 4 illustriert auch Aspekte in Bezug auf das Beleuchtungsmodul 100 zur winkelselektiven Beleuchtung. Z.B. könnte das Beleuchtungsmodul 100, das voranstehend in Bezug auf die FIGs. 1 - 3 diskutiert wurde, verwendet werden. FIG. 4 illustriert eine beispielhafte Anordnung des Beleuchtungsmoduls 100 in dem Strahlengang 261. In dem Beispiel der FIG. 4 ist das Beleuchtungsmodul 100 zwischen der Scanoptik 213 und dem Objektiv 214 direkt im Strahlengang 261 angeordnet. Dabei ist ersichtlich, dass der lichtdurchlässige Bereich 112 eine laterale Abmessung senkrecht zu dem Strahlengang 261 aufweist, die größer als eine Strahlweite des Strahlengangs 261 ist. Deshalb ist es möglich, dass das Licht entlang des Strahlengangs 261 zumindest teilweise bzw. größtenteils durch das Beleuchtungsmodul 100 bzw. den lichtdurchlässigen Bereich hindurchtritt.

Das Beleuchtungsmodul 100 definiert einen weiteren Strahlengang 222 (gepunktetgestrichelte Line in FIG. 4). Auch der Strahlengang 222 kann zur Beleuchtung des Probenobjekts (in FIG. 4 nicht dargestellt) auf dem Probenhalter 215 verwendet werden. Zur Detektion eines Signals bei Beleuchtung des Probenobjekts durch das Beleuchtungsmodul 100 kann zum Beispiel der Detektor 230 oder ein weiterer Detektor (in FIG. 4 nicht dargestellt) verwendet werden.

FIG. 5 illustriert Aspekte in Bezug auf ein LSM 200. Das LSM 200 gemäß dem Beispiel der FIG. 5 entspricht im Wesentlichen dem LSM 200 gemäß dem Beispiel der FIG. 4. Jedoch ist in dem Beispiel der FIG. 5 das Beleuchtungsmodul 100 an einer anderen Stelle in Bezug auf den Strahlengang 261 angeordnet. In dem Beispiel der FIG. 5 ist das Beleuchtungsmodul 100 im Durchtrittsstrahlengang 261 angeordnet, das heißt in Bezug auf das Beleuchtungsmodul 211 auf der entgegengesetzten Seite des Probenhalters 215. In dem Beispiel der FIG. 5 ist der Detektor 230 teilweise in dem den lichtdurchlässigem Bereich 112 implementierenden Loch angeordnet.

Trotz der räumlichen Nähe zwischen dem Beleuchtungsmodul 100 und dem Detektor 230 kann eine Wechselwirkung zwischen diesen Elementen 100, 230 vergleichsweise gering ausfallen. Dies kann z.B. dadurch erreicht werden, dass das Detektionsspektrum des Detektors 230 verschieden ist von dem Emissionsspektrum der Lichtquellen 111.

Während in FIG. 5 der Detektor 230 in dem Loch des lichtdurchlässigen Bereichs 112 angeordnet ist, könnte in anderen Beispielen der Detektor 230 und das Beleuchtungsmodul 100 im Durchtrittsstrahlengang getrennt voneinander angeordnet sein, z.B. entsprechend einer Anordnung wie in FIG. 4 diskutiert.

In den voranstehenden Beispielen wurden Szenarien illustriert, in denen der Träger 110 des Beleuchtungsmoduls 100 einen lichtdurchlässigem Bereich 112 aufweist, der zum Beispiel durch ein Loch implementiert ist. In anderen Beispielen ist es aber möglich, dass der Träger 110 keinen entsprechenden lichtdurchlässigen Bereich 112 aufweist. Ein solches Szenario ist in dem Beispiel der FIG. 6A illustriert.

Fig. 6A illustriert Aspekte in Bezug auf ein LSM 200, welches nicht unter die beanspruchte Erfindung fällt. Das LSM 200 entspricht grundsätzlich den in Bezug auf die voranstehenden FIGs. 4 und 5 diskutierten LSMs 200. In dem Szenario der FIG. 6A ist das Beleuchtungsmodul 100 zwischen der Scanoptik 213 und dem Objektiv 214 eingespiegelt angeordnet. Dazu ist ein teilreflektiver Spiegel 243 vorgesehen, welcher den mit dem Beleuchtungsmodul 100 assoziierten Strahlengang 222 mit dem Strahlengang 261 vereinigt. Ein lichtdurchlässiger Bereich 112 ist nicht vorgesehen.

FIG. 6B illustriert Aspekte in Bezug auf ein LSM 200. Insbesondere illustriert FIG. 6B Aspekte in Bezug auf einen weiteren Detektor 241 (in FIG. 6B ist aus Gründen der Übersichtlichkeit der Detektor 230 nicht dargestellt; dieser könnte im Durchtrittstrahlengang oder im Reflektionsstrahlengang angeordnet sein). Der weitere Detektor 241 kann dazu verwendet werden, Signale zu erfassen, wenn das Probenobjekt durch das weitere Beleuchtungsmodul 100 (in FIG. 6B aus Gründen der Einfachheit nicht dargestellt) beleuchtet wird. In dem Beispiel der FIG. 6B ist der Detektor 241 zwischen der Scanoptik 213 und dem Objektiv 214 eingespiegelt angeordnet. Dazu ist eine weitere Optik 242 und eine Auskoppeleinheit 243 vorgesehen. Die Anordnung des Detektors 241 in FIG. 6B ist lediglich beispielhaft; in anderen Implementierungen könnte der Detektor 241 zum Beispiel in Bezug auf den Probenhalter 215 hinter der Scanoptik 213 angeordnet sein oder könnte im Durchtrittsstrahlengang 261 angeordnet sein, d.h. in Bezug auf das Beleuchtungsmodul 211 hinter dem Probenhalter 215.

Der Detektor 241 kann z.B. ein CCD-Sensor oder CMOS-Sensor sein. Der Detektor 241 könnte z.B. Teil einer Kamera sein. Der Detektor 241 könnte z.B. ein Übersichtsbild erzeugen. Der Detektor 241 könnte aber auch ein stark vergrößertes Bild erzeugen.

FIG. 7 illustriert Aspekte in Bezug auf ein herkömmliches LSM 200A gemäß Referenzimplementierungen, welches neben dem Beleuchtungsmodul 211 mit der Laserlichtquelle auch ein weiteres Beleuchtungsmodul 261A umfasst, das in Kombination mit einem geeigneten Objektiv (in FIG. 7 nicht dargestellt) zur Phasenkontrast-Bildgebung verwendet werden kann. In einem solchen herkömmlichen LSM 200A kann es erforderlich sein, dass das Objektiv 214 in Abhängigkeit von dem Beleuchtungsmodus (Beleuchtung durch das Beleuchtungsmodul 211 oder das Beleuchtungsmodul 261A) mit einem weiteren Objektiv (in FIG. 7 nicht dargestellt) auszutauschen. Dies vergrößert den benötigten Bauraum und erfordert eine komplexe Mechanik. Darüber hinaus kann es nicht oder nur eingeschränkt möglich sein, gleichzeitig eine Beleuchtung durch das Beleuchtungsmodul 211 und das Beleuchtungsmodul 261A zu implementieren. Z.B. kann je nach gewählter Beleuchtung der Spiegel 261B verkippt werden.

FIG. 8A illustriert Aspekte in Bezug auf ein optischen Mikroskop 300, zum Beispiel ein Auflichtmikroskop oder ein Durchlichtmikroskop, welches damit in seiner Gesamtheit nicht unter die beanspruchte Erfindung fällt. Das Mikroskop 300 umfasst ein Okular 315 und ein Objektiv 314. Das Okular 315 definiert einen Detektionsstrahlengang 321 (in FIG. 8A mit der gestrichelten Linie dargestellt).

Während in dem Beispiel der Fig. 8A ein Okular 315 dargestellt ist, könnte der Detektionstrahlengang 321 in anderen Beispielen auch mit anderen Einheiten kombiniert werden, beispielsweise mit einer CCD-Kamera, etc. Entsprechendes gilt für alle hierin beschriebenen Beispiele. Das Mikroskop 300 umfasst auch einen Probenhalter 215, der eingerichtet ist, um ein Probenobjekt im Strahlengang 321 zu fixieren.

In dem Beispiel der Fig. 8A ist im Durchtrittsstrahlengang 322 - der nicht durch das Objektiv 314 verläuft - eine Kamera 310 angeordnet, die dazu verwendet wird, ein Übersichtsbild des Probenhalters 215 bzw. des Probenobjekts bereitzustellen. Im Durchtrittsstrahlengang 322 ist auch das Beleuchtungsmodul 100 angeordnet. Die zentrale Achse 221 ist konzentrisch mit einem Zentralstrahl 221 des Durchtrittstrahlengangs 322 angeordnet. Der Zentralstrahl entspricht der optischen Achse des Mikroskops 300. Der Träger 110 des Beleuchtungsmoduls 100 ist starr mit einem Kamerakörper 311 gekoppelt. Dabei kann das Beleuchtungsmodul 100 gemäß der anderen hierin beschriebenen Beispiele ausgestaltet sein. Insbesondere weist das Beleuchtungsmodul 100 mehrere Lichtquellen 111 auf (in Fig. 8A nicht gezeigt). Das Beleuchtungsmodul 110 ist derart angeordnet, dass Licht entlang des Strahlengangs 322 durch den lichtdurchlässigen Bereich 112, etwa ein nicht unter die Erfindung fallendes zentral oder erfindungsgemäß dezentral angeordnetes Loch, hindurchtreten kann. Die Kamera 310 ist teilweise in dem Loch angeordnet. Durch das Vorsehen des Beleuchtungsmoduls 110 in dem Strahlengang 322 kann eine besonders platzsparende Implementierung der winkelselektiven Beleuchtung erfolgen.

Fig. 8B und Fig. 8C illustrieren Aspekte in Bezug auf ein optisches Mikroskop 300, zum Beispiel ein Auflichtmikroskop oder ein Durchlichtmikroskop. Das optische Mikroskop 300 gemäß der Figs. 8B, 8C entspricht grundsätzlich dem optischen Mikroskop 300 gemäß der Fig. 8A. Insbesondere ist die Kamera 310, sowie das Beleuchtungsmodul 100 zur winkelselektiven Beleuchtung wiederum im Durchtrittsstrahlengang 322 angeordnet. Dabei ist aber in dem Beispiel der Fig. 8B der Träger 110 nicht fest mit dem Kamerakörper 311 gekoppelt. In dem Beispiel der Fig. 8B ist eine mit der Kamera 310 assoziierte Abbildungsoptik 312 teilweise in dem lichtdurchlässigen Bereich 112 angeordnet. In dem Beispiel der Fig. 8C ist wiederum die Abbildungsoptik 312 teilweise in dem lichtdurchlässigen Bereich 112 angeordnet, wobei jedoch der Träger 110 starr mit dem Kamerakörper 311 gekoppelt ist.

FIG. 9A illustriert Aspekte in Bezug auf ein optisches Mikroskop 300, zum Beispiel ein Auflichtmikroskop oder in Durchlichtmikroskop, welches damit in seiner Gesamtheit nicht unter die beanspruchte Erfindung fällt. Das Mikroskop der FIG. 9A entspricht grundsätzlich dem Mikroskop 300 der FIGs. 8A-8C. Dabei verläuft aber der mit der Kamera 310 assoziierte Strahlengang 322 (in FIG. 9A mit der gestricheltgepunkteten Linie dargestellt) auch durch das Objektiv 314. Insbesondere wird der Strahlengang 322 in den Detektionsstrahlengang 321 eingespiegelt. Dafür umfasst das Mikroskop 300 eine Auskopplungseinheit 313, zum Beispiel einen Strahlteiler wie einen teilreflektiven Spiegel. Im Bereich des Strahlengangs 322 ist die Abbildungsoptik 312 angeordnet. Außerdem ist im Bereich des Strahlengangs 322 das Beleuchtungsmodul 110 angeordnet. Insbesondere ist das Beleuchtungsmodul 110 derart angeordnet, dass Licht entlang des Strahlengangs 322 durch den lichtdurchlässigen Bereich 112 hindurchtreten kann. Die zentrale Achse 221 ist konzentrisch mit einem Zentralstrahl des Strahlengangs 322 angeordnet. Durch das Vorsehen des Beleuchtungsmoduls 110 in dem Strahlengang 322 kann eine besonders platzsparende Implementierung der winkelselektiven Beleuchtung erfolgen.

Zum Beispiel wäre es möglich, dass die Kamera 311 ein Bild für das durch die winkelselektive Beleuchtung mittels des Beleuchtungsmoduls 110 beleuchtete Probenobjekt erfasst. Es wäre auch möglich, einen weiteren Detektor vorzusehen (in FIG. 9A nicht dargestellt); dieser könnte im Durchtrittsstrahlengang 322 oder im Reflektionsstrahlengang 322 angeordnet sein.

FIG. 9B illustriert Aspekte in Bezug auf ein Mikroskop 300. Das Mikroskop 300 des Beispiels der FIG. 9B entspricht grundsätzlich dem Mikroskop 300 des Beispiels der FIG. 9A. In dem Beispiel der FIG. 9B ist die Abbildungsoptik 312 teilweise in dem lichtdurchlässigen Bereich 112 des Beleuchtungsmoduls 100 angeordnet. Der lichtdurchlässige Bereich 112 kann dabei als Loch ausgebildet sein, wie obenstehend bereits beschrieben. Z.B. wäre es möglich, dass eine Linse, ein Gitter und / oder ein Filter der Abbildungsoptik 312 in dem Loch angeordnet ist. Derart kann eine besonders platzsparende Integration des Beleuchtungsmoduls 100 gewährleistet werden.

FIG. 9C illustriert Aspekte in Bezug auf ein Mikroskop 300. Das Mikroskop 300 des Beispiels der FIG. 9C entspricht grundsätzlich dem Mikroskop 300 der Beispiele der FIGs. 8A-8C und 9A-9B. Im Beispiel der FIG. 9C ist das Beleuchtungsmodul 100 mit der Kamera 311 kombiniert. Derart kann eine besonders platzsparende Integration des Beleuchtungsmoduls 100 gewährleistet werden. Zum Beispiel könnte eine Sensorfläche der Kamera 311 angrenzend oder innerhalb des lichtdurchlässigen Bereichs 112 angeordnet sein. Die Kamera 311 kann zum Beispiel fest verbunden mit dem Beleuchtungsmodul 110 ausgebildet sein.

Das Mikroskop 300 der FIGs. 8A, 8B, 8C, 9A, 9B, 9C, 10 könnte ein weiteres Beleuchtungsmodul aufweisen. Diese könnte zur Beleuchtung des Probenobjekts bei Betrachtung durch das Okular dienen. Die weitere Beleuchtungsquelle könnten z.B. eine Kollimator-Optik und eine Lichtquelle aufweisen. Es wäre aber auch möglich, dass das Beleuchtungsmodul 100 zur Beleuchtung des Probenobjekts bei Betrachtung durch das Okular verwendet wird. Dazu könnten beispielsweise mehrere Lichtquellen 111 gleichzeitig betrieben werden, um eine gleichförmige Beleuchtung des Probenobjekts zu ermöglichen.

Fig. 10A illustriert Aspekte in Bezug auf ein Mikroskop 300. Das Mikroskop 300 des Beispiels der Fig. 10A entspricht grundsätzlich dem Mikroskop 300 der Beispiele der FIGs. 8A-8C und 9A-9C und fällt damit in seiner Gesamtheit nicht unter die beanspruchte Erfindung. Im Beispiel der Fig. 10A ist das Beleuchtungsmodul 100 direkt im Detektionsstrahlengang 321 angeordnet und weist eine Ausdehnung quer zum Detektionsstrahlengang 321 auf. Dies kann eine besonders platzsparende Integration des Beleuchtungsmoduls 100 gewährleisten. Ein separater weiterer Strahlengang 322 muss nicht vorgesehen sein.

FIG. 10B illustriert Aspekte in Bezug auf das erfindungsgemäße Beleuchtungsmodul 100. Das Beleuchtungsmodul 100 umfasst einen lichtdurchlässigen Bereich 112, der als dezentral angeordnetes Loch ausgebildet ist. Dabei weist das Loch 112 einen Abstand 119 von der zentralen Achse 221 auf, die bei Anordnung des Beleuchtungsmoduls 100 in einer optischen Vorrichtung 200, 300 koinzident mit einem Zentralstrahl des jeweiligen Strahlengangs sein kann.

Ein Beleuchtungsmodul 100 gemäß dem Beispiel der FIG. 10B kann insbesondere in Bezug auf eine Anordnung des Beleuchtungsmoduls 100 im Durchlichtstrahlengang 322 eines optischen Mikroskops 300, d.h. in Bezug auf den Detektionsstrahlengang 321 hinter dem Detektor, erstrebenswert sein, vgl. FIGs. 8A-8C. Dann kann direktes Licht, das durch zentral angeordnete Lichtquellen 111 - d.h. zwischen der zentralen Achse 221 und dem Loch 112 - erzeugt wird, in das Objektiv 314 einfallen.

In dem Beispiel der FIG. 10B ist der Abstand 119 so klein gewählt, dass eine Projektion 118 der kleinsten Blendenöffnung des Objektivs 314 auf den Träger 110 (in FIG. 10B mit der gestrichelten Linie dargestellt) Lichtquellen 111 umfasst und das Loch 112 angrenzend angeordnet ist. Dadurch kann eine Hellfeld-Bildgebung erreicht werden.

Während das Beispiel der FIG. 10B in Bezug auf den durch ein Loch implementierten lichtdurchlässigen Bereich 112 diskutiert wurde, können in anderen Beispielen entsprechende Techniken auch für anders implementierte lichtdurchlässige Bereiche verwendet werden.

FIG. 11 illustriert Aspekte in Bezug auf das Beleuchtungsmodul 100. In FIG. 11 ist ein Beispiel dargestellt, in welchem der Träger 111 aus lichtdurchlässigem Festkörper-Material ausgebildet ist. Zwischenräume zwischen den verschiedenen Lichtquellen 111 implementieren dann den lichtdurchlässigen Bereich 112.

Die Lichtquellen 111 sind in dem Beispiel der FIG. 11 in einer Matrix-Struktur mit hexagonaler Einheitszelle angeordnet. Es wäre noch andere Anordnungen der Lichtquellen 111 möglich, z.B. eine Matrix-Struktur in rechtecksförmiger Einheitszelle usf. oder eine ungeordnete Anordnung.

In dem Beispiel der FIG. 11 sind die Lichtquellen 111 auf der Oberseite 110A des Trägers 110 (in der Zeichenebene der FIG. 11) mit einem vergleichsweise geringen geometrischen Füllfaktor von weniger als 30 % angeordnet (in FIG. 11 entspricht der geometrische Füllfaktor der Summe der Flächen aller schwarzen Bereiche relativ zur Gesamtfläche des Trägers 110). Durch den vergleichsweise geringen geometrischen Füllfaktor ist es möglich, dass ein signifikanter Betrag von einfallendem Licht durch den Träger 110 des Beleuchtungsmoduls 100 im Bereich der Zwischenräume zwischen den verschiedenen Lichtquellen 111 hindurchtreten kann.

FIG. 12 illustriert Aspekte in Bezug auf das Beleuchtungsmodul 100. In FIG. 12 ist ein Beispiel dargestellt, in welchem der Träger 110 aus nicht-lichtdurchlässigem Material hergestellt ist, zum Beispiel aus Aluminium oder einem Kunststoff-Material. **In** dem Beispiel der FIG. 12 ist der lichtdurchlässige Bereich 112 durch ein zentral angeordnetes Loch, welches nicht unter die beanspruche Erfindung fällt, ausgebildet. Zum Beispiel kann es möglich sein, dass bei Anordnung des Beleuchtungsmoduls 100 in einem Mikroskop oder LSM der Raum innerhalb des lichtdurchlässigem Bereichs 112/des Lochs frei bleibt oder aber andere optisch wirksame Elemente, wie zum Beispiel ein Detektor, eine Linse, etc. innerhalb des Lochs angeordnet sind.

Während in FIG. 12 ein nicht unter die beanspruche Erfindung fallendes Beispiel gezeigt ist, in dem der lichtdurchlässigem Bereich 112 in einem Zentrum des Trägers 110 angeordnet ist, ist in erfindungsgemäßen Beispielen der lichtdurchlässige Bereich 112 auch außerhalb des Zentrums des Trägers 110 angeordnet. Es ist grundsätzlich auch nicht erforderlich, dass der lichtdurchlässige Bereich 112 symmetrisch in Bezug auf eine Zentralachse ausgebildet ist.

FIG. 13 illustriert Aspekte in Bezug auf das Beleuchtungsmodul 100, wobei das Beleuchtungsmodul 100 ein nicht unter die Erfindung fallendes zentrales Loch aufweist. In FIG. 13 sind die verschiedenen Quadranten des Trägers 110 durch laterale ausgedehnte Lichtquellen 111 besetzt. Zum Beispiel könnten die Lichtquellen 111 in dem Beispiel der FIG. 13 durch organische Leuchtdioden implementiert werden. Mittels einer solchen Ausgestaltung des Beleuchtungsmoduls 100 kann die Beleuchtung des Probenobjekts aus ausgedehnten Raumwinkeln möglich sein.

FIG. 14 illustriert Aspekte in Bezug auf das Beleuchtungsmodul 100, wobei das Beleuchtungsmodul 100 ein nicht unter die Erfindung fallendes zentrales Loch aufweist. In FIG. 14 sind die verschiedenen Lichtquellen 111 als Halogenlichtquellen ausgebildet. Diese sind symmetrisch in Bezug auf eine zentrale Achse angeordnet.

FIG. 15 illustriert Aspekte in Bezug auf das Beleuchtungsmodul 100, wobei das Beleuchtungsmodul 100 ein nicht unter die Erfindung fallendes zentrales Loch aufweist. In FIG. 15 ist der lichtdurchlässige Bereich 112 durch lichtdurchlässige organische Leuchtdioden 111 implementiert. Dabei kann der Träger 110 z.B. aus nicht-lichtdurchlässigem Material ausgebildet sein.

Aus einem Vergleich der FIGs. 10-15 ist ersichtlich, dass die Ausgestaltung des Beleuchtungsmoduls 100 in verschiedenen Beispielen stark variieren kann. Insbesondere können Ausgestaltungen, wie sie in Bezug auf die FIGs. 10-15 dargestellt sind, miteinander kombiniert werden.

FIG. 16 illustriert Aspekte in Bezug auf ein Beleuchtungsmodul 1000. Das Beleuchtungsmodul 1000 gemäß dem Beispiel der Fig. 16 entspricht grundsätzlich dem Beleuchtungsmodul 100 gemäß dem Beispiel der Fig. 1. Dabei weist der Träger 101 des Beleuchtungsmoduls 1000 - im Gegensatz zu dem Beispiel der Fig. 1 und nicht erfindungsgemäß - keinen lichtdurchlässigen Bereich auf. In dem Beispiel der Fig. 16 ist auf dem Träger 101 ein Detektor 1230 angebracht. Zum Beispiel kann der Detektor 1230 auf der Oberseite 110A des Trägers 101 angebracht sein, vgl. FIG. 17. Dann ist die Sensorfläche 1231 beabstandet von der Oberfläche 110A. Zum Beispiel kann der Detektor 1230 auf dem Träger 101 angeklebt, verschraubt oder anderweitig befestigt sein.

In den Beispielen der FIGs. 16 und 17 ist der Detektor 1230 zentral auf dem Träger 101 angeordnet. Das bedeutet insbesondere, dass der Detektor 1230 zentral in Bezug auf die Achse 221 angeordnet ist. In erfindungsgemäßen Beispielen ist der Detektor 1230 dezentral auf dem Träger 101 angeordnet.

Zum Beispiel wäre es möglich, dass in Bezug auf den Detektor 1230 verschiedene Techniken angewendet werden, die zuvor in Bezug auf Fig. 10B beschrieben wurden. Es wäre also möglich, dass der Detektor 1230 einen Abstand von dem Zentrum des Trägers 110 aufweist, wobei gemäß der beanspruchten Erfindung zwischen dem Zentrum des Trägers 110 und dem Detektor 1230 zumindest eine der Lichtquellen 111 des Beleuchtungsmoduls 100 angeordnet ist. Der Abstand zwischen dem Detektor 1230 und dem Zentrum des Trägers 110 kann wiederum einer Projektion 118 der Blendenöffnung des Objektivs 314 auf den Träger 110 entsprechen. Dadurch kann Hellfeld-Beleuchtung gefördert werden.

In den Beispielen der FIGs. 16 und 17 weist das Modul 1000 jeweils einen einzigen Detektor 1230 auf. In verschiedenen Beispielen wäre es jedoch möglich, dass das Modul 1000 mehr als einen einzigen Detektor aufweist, zum Beispiel zwei oder drei Detektoren. Dabei können die mehreren Detektoren voneinander beabstandet auf dem Träger 101 angebracht sein. Zum Beispiel könnten die mehreren Detektoren 1230 auf unterschiedlichen Seiten der Achse 221 angebracht sein oder in unterschiedlichen Quadranten in Bezug auf die Achse 221.

FIG. 18 ist eine schematische Darstellung der optischen Vorrichtung 200, 300, die gemäß verschiedener hierin beschriebener Beispiele zur winkelselektiven Beleuchtung eingerichtet ist. Die optische Vorrichtung 200, 300 umfasst den Detektor 241, der Licht, das aus den Lichtquellen 111 des Beleuchtungsmoduls 110 gesendet wird, detektiert. Die optische Vorrichtung 200, 300 umfasst auch eine Recheneinheit 299. Die Recheneinheit 299 ist eingerichtet, um das Beleuchtungsmodul 100 bzw. die Lichtquellen 111 zum gesonderten und/oder sequentiellen Beleuchten des Probenobjekts aus mehreren Beleuchtungsrichtungen anzusteuern. Dazu können z.B. unterschiedliche Lichtquellen 111 gesondert und/oder sequentiell aktiviert werden. Die Recheneinheit 299 ist weiterhin für jede Beleuchtungsrichtung eingerichtet, um den Detektor 241 zum Erfassen eines jeweiligen Messbilds des Objekts anzusteuern. Die Recheneinheit 299 ist weiterhin eingerichtet, um die Messbilder zum Erhalten eines Ergebnisbilds zu kombinieren. Das Ergebnisbild weist einen Phasenkontrast auf. Dabei kann die Recheneinheit 299 eingerichtet sein, um Techniken der digitalen Nachbearbeitung anzuwenden, die in Bezug auf DE 10 2014 112 242 A1 offenbart sind.

Fig. 19 ist ein Flussdiagramm eines Verfahrens gemäß verschiedener Beispiele. Zum Beispiel könnte die Recheneinheit 299 eingerichtet sein, um das Verfahren gemäß Fig. 19 durchzuführen.

Zunächst werden in Schritt 2001 eine aktuelle Beleuchtungsrichtungen 91 ausgewählt. Dann werden in Schritt 2002 eine oder mehrere Lichtquellen 111 angesteuert, so dass die Beleuchtung eines Probenobjekts aus den ausgewählten Beleuchtungsrichtungen erreicht wird. In Schritt 2003 wird ein zugehöriges Messbild erfasst, zum Beispiel mittels eines geeigneten Detektors 241, zum Beispiel mittels eines CCD-Detektors oder eines CMOS-Detektors, eine Übersichtskamera und/oder eines Photomultipliers. Dazu kann der Detektor 241 geeignet angesteuert werden. Das Messbild wird erfasst, während das Probenobjekt aus der aktuellen Beleuchtungsrichtungen beleuchtet wird.

Dann wird in Schritt 2004 überprüft, ob das Erfassen eines weiteren Messbilds aus einer weiteren Beleuchtungsrichtung 91 erforderlich ist. Ist dies der Fall, so werden die Schritte 2001-2003 erneut durchgeführt.

Anschließend wird in Schritt 2002 ein Ergebnisbild erzeugt. Das Ergebnisbild weist einen Phasenkontrast für ein abgebildetes Objekt auf (Phasenkontrastbild). Das Phasenkontrastbild wird durch Kombination der Messbilder, die in den Iterationen von Schritt 2003 erfasst wurden, bestimmt.

Während die Messbilder typischerweise keinen oder keinen signifikanten Phasenkontrast aufweisen, kann durch das Kombinieren der Messbilder das Phasenkontrastbild erzeugt werden, welches einen signifikanten Phasenkontrast-Anteil aufweist. Insbesondere im Vergleich zu anderen herkömmlichen Techniken der Phasenkontrast-Bildgebung kann mit dem vorliegend beschriebenen Verfahren der Effekt einer besonders einfachen Implementierung der Phasenkontrast-Bildgebung einerseits, als auch der Effekt einer besonders einfachen und damit kostengünstigen und robusten Ausgestaltung der optischen Vorrichtung erzielt werden.

Zum Beispiel wäre es möglich, dass die Beleuchtungsrichtungen jeweils Paare bilden bzw. paarweise angeordnet sind. Dabei kann es möglich sein, dass eine Beleuchtungsrichtung immer nur einem Paar zugeordnet ist. Es wäre aber auch möglich, dass zumindest einige der Beleuchtungsrichtungen mehreren Paaren zugeordnet sind. Zumindest die Messbilder der zu einem Paar zugehörigen Beleuchtungsrichtungen können dann zum Erhalten eines jeweiligen Ergebnisbilds kombiniert werden.

Es können unterschiedliche Kriterien für die Zuordnung von zwei Beleuchtungsrichtungen 91 zu einem Paar gelten. Z.B. können geometrische Kriterien der Beleuchtungsrichtungen 91 eines Paars gelten, etwa in Bezug auf die optische Achse; derart kann es z.B. möglich sein, einen besonders hohen Phasenkontrastanteil in dem Phasenkontrastbild zu erzeugen. Z.B. könnten die Beleuchtungsrichtungen eines Paars symmetrisch in Bezug auf diejenige Achse der optischen Vorrichtung einschließen, entlang derer ein idealisierter Lichtstrahl keine oder nur eine geringe Ablenkung erfährt (optische Achse) und /oder in Bezug auf eine Ebene, die die optische Achse beinhaltet, angeordnet sein. Es wäre aber alternativ oder zusätzlich auch möglich, dass als alternatives oder zusätzliches Kriterium der Zugehörigkeit von zwei Beleuchtungsrichtungen 91 zu einem Paars ein Zeitpunkt des Beleuchtens und Erfassens berücksichtigt wird; z.B. können diejenigen Beleuchtungsrichtungen 91 ein Paar bilden, für die unmittelbar oder zeitnah hintereinander das jeweilige Messbild erfasst wird; derart könnte z.B. eine gewisse Robustheit gegenüber Bewegungsartefakten erzielt werden. Im Allgemeinen kann als alternatives oder zusätzliches Kriterium für die Zugehörigkeit von zwei Beleuchtungsrichtungen 91 zu einem Paar auch eine nachfolgende Auswertung zum Erzeugen des Phasenkontrastbilds berücksichtigt werden; z.B. könnte immer für die zwei Messbilder eines Paars ein einzelnes Ergebnisbild durch Kombinieren dieser Messbilder erzeugt werden.

Es wäre möglich, dass die zwei Beleuchtungsrichtungen 91 eines Paars korrelierende Winkel mit der optischen Achse einschließen. Korrelierende Winkel kann z.B. bedeuten: im Wesentlichen gleiche Winkel oder im Wesentlichen betragsmäßig gleiche Winkel; im Wesentlichen kann insbesondere in Bezug auf technische Begrenzungen in der Genauigkeit, wie z.B. systematische oder statistische Fehler im Erfassen der Messbilder durch die optische Vorrichtung und / oder baulich bedingte Limitation einer Beleuchtungsvorrichtung der optischen Vorrichtung charakterisiert sein. Sofern zwar absolut verschiedene, aber z.B. innerhalb der Genauigkeit der optischen Vorrichtung gleiche Winkel implementiert sind, kann dies ein solches Kriterium der im Wesentlichen gleichen Winkel erfüllen.

Solche Kriterien gelten nachfolgend auf entsprechende Angaben von Winkeln und / oder anderen Eigenschaften von Beleuchtungsrichtungen 91 oder der optischen Vorrichtung.

Zur Beschreibung von geometrischen Eigenschaften der Beleuchtungsrichtungen kann es hilfreich sein, die Beleuchtungsrichtungen 91 durch einen Beleuchtungsvektor zu beschreiben. Die Beleuchtungsvektoren können in Bezug auf einen Ursprung der optischen Vorrichtung definiert sein, etwa in Bezug auf das Objekt und / oder einen Schnittpunkt einer Fokusebene mit der optischen Achse. Eine Länge der Beleuchtungsvektoren kann z.B. einer Amplitude der Beleuchtung aus der jeweiligen Beleuchtungsrichtung entsprechen; bei nachfolgender Erörterung der Orientierung von verschiedenen Beleuchtungsvektoren kann es entbehrlich sein, eine Länge der Beleuchtungsvektoren zu berücksichtigen. Der Winkel den ein Beleuchtungsvektor mit der optischen Achse einschließt, kann dann dem Winkel der jeweiligen Beleuchtungsrichtung entsprechen.

Z.B. kann es erstrebenswert sein, dass Beleuchtungsvektoren eines Paars von Beleuchtungsrichtungen einen Winkel miteinander einschließen, der größer als 10° ist, vorzugsweise größer als 20°, besonders vorzugsweise größer als 40° ist. Es wäre alternativ oder zusätzlich auch möglich, dass Beleuchtungsvektoren eines Paars von Beleuchtungsrichtungen jeweils einen Winkel mit der optischen Achse einschließen, der größer als 5° ist, vorzugsweise größer als 10°, besonders vorzugsweise größer als 20° ist. Derart kann erreicht werden, dass ein Differenzvektor zwischen den beiden Beleuchtungsvektoren eines Paars von Beleuchtungsrichtungen 91 eine signifikante Komponente senkrecht zur optischen Achse aufweist; dies kann den Phasenkontrast im Phasenkontrastbild besonders stark erhöhen.

Insbesondere kann es möglich sein, dass die Beleuchtungsvektoren von zwei Beleuchtungsrichtungen eines Paars von Beleuchtungsrichtungen durch Rotation um die optische Achse der optischen Vorrichtung um einen Winkel von größer als 25°, vorzugsweise von größer als 50°, besonders vorzugsweise von größer als 85° ineinander überführt werden können. Hierdurch wird der Differenzvektor besonders groß.

Die zwei Beleuchtungsrichtungen eines Paars von Beleuchtungsrichtungen können auch derart angeordnet sein, dass zugehörige Beleuchtungsvektoren durch Rotation um die optische Achse um einen Winkel von 160° bis 200°, vorteilhaft von 175° bis 185°, besonders vorteilhaft von 180° miteinander einschließen. Es wäre auch möglich, dass die zugehörigen Beleuchtungsvektoren durch Rotation um die optische Achse um einen Winkel von 70° bis 110°, vorteilhaft von 85° bis 95°, besonders vorteilhaft von 90° ineinander überführt werden können. In anderen Worten können die zwei Beleuchtungsvektoren eines Paars von Beleuchtungsrichtungen 91 in einer Ebene liegen und symmetrisch oder im Wesentlichen symmetrisch in Bezug auf die optische Achse angeordnet sein. Die optische Achse kann in dieser Ebene liegen (von dieser Ebene beinhaltet sein), z.B. wenn eine Rotation um 180° die beiden Beleuchtungsvektoren ineinander überführt. Derart kann ein vergleichsweise großer Phasenkontrast-Anteil im Phasenkontrastbild erhalten werden, denn die zwei Beleuchtungsrichtungen eines Paars sind derart komplementär zueinander angeordnet.

Im Allgemeinen kann es erstrebenswert sein, eine größere Anzahl von Beleuchtungsrichtungen zum Erhalten des Phasenkontrastbildes zu verwenden. Insbesondere kann bei entsprechender Anordnung der verschiedenen Beleuchtungsrichtungen 91 der Phasenkontrast-Anteil in dem Phasenkontrastbild zunehmen. Zum Beispiel wäre es möglich, mehrere Paare von Beleuchtungsrichtungen zu berücksichtigen. Zum Beispiel wäre es möglich, das Objekt sequentiell aus 2 oder 4 oder 6 oder 8 Beleuchtungsrichtungen oder mehr Beleuchtungsrichtungen zu beleuchten. Zum Beispiel wäre es möglich, dass ein erstes Paar von Beleuchtungsrichtungen einen ersten Differenzvektor von zugehörigen Beleuchtungsvektoren bestimmt. Ein zweites Paar von Beleuchtungsrichtungen kann entsprechend einen zweiten Differenzvektor von zugehörigen Beleuchtungsvektoren bestimmen. Der erste und zweite Differenzvektor können einen Winkel miteinander einschließen, z.B. einen Winkel von 70° bis 110°, vorteilhaft von 85° bis 95°, besonders vorteilhaft von 90°.

Es wäre entsprechend auch möglich, dass eine erste Ebene durch die Beleuchtungsvektoren eines ersten Paars von Beleuchtungsrichtungen 91 definiert ist. Eine zweite Ebene kann z.B. durch die Beleuchtungsvektoren eines zweiten Paars von Beleuchtungsrichtungen definiert sein. Die erste Ebene und die zweite Ebene können z.B. einen Winkel von 70° bis 110° miteinander einschließen, vorteilhaft von 85° bis 95°, besonders vorteilhaft von 90°. Die Ebenen können z.B. dadurch definiert sein, dass die jeweiligen Beleuchtungsvektoren in der Ebene liegen. Es wäre auch möglich, dass die Ebenen durch einen Normalenvektor definiert sind, der parallel zu einem Differenzvektor der jeweiligen Beleuchtungsvektoren orientiert ist; die optische Achse kann in der Ebene liegen.

Derart können Differenzvektoren der Beleuchtungsvektoren der beiden Paare von Beleuchtungsrichtungen 91 also einen vergleichsweise großen Winkel von bis zu 90° miteinander einschließen; dadurch kann der Phasenkontrast in dem Phasenkontrastbild entlang verschiedener Bildrichtungen erhöht werden. Z.B. kann ein Phasenkontrast-Anteil in dem Phasenkontrastbild besonders groß entlang solcher Bildrichtungen sein, für die Beleuchtungsvektoren eines Paar von Beleuchtungsrichtungen eine Komponente senkrecht zur optischen Achse aufweisen. Insbesondere kann ein Phasenkontrast-Anteil in dem Phasenkontrastbild besonders groß entlang solcher Richtungen sein, für die der Differenzvektor aus den Beleuchtungsvektoren eines Paars von Beleuchtungsrichtungen eine Komponente senkrecht zur optischen Achse aufweist. Deshalb kann es erstrebenswert sein, komplementär und / oder symmetrisch angeordnete Beleuchtungsrichtungen zu verwenden. Um einen isotropen Phasenkontrast in dem Phasenkontrastbild zu erzeugen kann es erstrebenswert sein, dass die Beleuchtungsrichtungen gleichmäßig verteilte Winkel mit der optischen Achse einschließen.

Solche Beleuchtungsrichtungen 91 bzw. Beleuchtungsvektoren wie voranstehend beschrieben können durch eine geeignete Anordnung und/oder Ausdehnung der Lichtquellen 111 auf dem Träger 101 implementiert werden.

Zusammenfassend wurden obenstehend Techniken in Bezug auf Beleuchtungsmodule zur winkelselektiven Beleuchtung beschrieben. Solche Techniken ermöglichen es, die winkelselektive Beleuchtung flexibel mit verschiedenen optischen Vorrichtungen zu kombinieren.

## Patentansprüche

1. Laser-Scanning-Mikroskop (200), das umfasst:
- ein erstes Beleuchtungsmodul (211) mit einer Laserlichtquelle,
- ein zweites Beleuchtungsmodul (100) mit einem Träger (101) und mehreren Lichtquellen (111), die auf dem Träger (101) angeordnet sind,
- eine Scanoptik (213),
- ein Objektiv (214),
- einen Probenhalter (215), der eingerichtet ist, um ein Probenobjekt in einem durch die Laserlichtquelle definierten Strahlengang (261) zu fixieren,
- einen Detektor (230), und
- eine Recheneinheit (299), die eingerichtet ist, um die mehreren Lichtquellen (111) zum gesonderten und/oder sequentiellen Beleuchten eines Objekts aus mehreren Beleuchtungsrichtungen (91) anzusteuern,
wobei die Scanoptik (213) und das Objektiv (214) in Bezug auf das erste Beleuchtungsmodul (211) vor dem Probenhalter (215) und im Strahlengang (261) angeordnet sind,
wobei mindestens eine Lichtquelle der mehreren Lichtquellen zwischen einem Zentrum des Trägers und einem im Träger ausgebildeten lichtdurchlässigem Bereich (112) oder dem auf dem Träger angeordneten Detektor (230) angeordnet sind,
wobei das Zentrum durch einen Punkt auf dem Träger bestimmt ist, der durch einen Zentralstrahl des Strahlengangs (261) definiert ist,
wobei das zweite Beleuchtungsmodul (100) so angeordnet ist, dass direktes Licht der mindestens einen Lichtquelle (111) in das Objektiv (214) eindringt.

2. Laser-Scanning-Mikroskop (200) nach Anspruch 1,
wobei der mindestens eine lichtdurchlässige Bereich (112) als dezentral auf dem Träger (101) angeordnetes Loch ausgebildet ist.

3. Laser-Scanning-Mikroskop (200) nach Anspruch 2,
wobei der Detektor (230, 241) zumindest teilweise in dem Loch angeordnet ist.

4. Laser-Scanning-Mikroskop (200) nach einem der voranstehenden Ansprüche,
wobei das zweite Beleuchtungsmodul (100) in Bezug auf das erste Beleuchtungsmodul (211) hinter dem Probenhalter (215) oder vor dem Probenhalter (215) angeordnet ist.

5. Laser-Scanning-Mikroskop (200) nach einem der voranstehenden Ansprüche,
wobei das zweite Beleuchtungsmodul (100) zwischen der Scanoptik (213) und dem Objektiv (214) im Strahlengang (261) angeordnet ist.

6. Laser-Scanning-Mikroskop (200) nach einem der voranstehenden Ansprüche,
wobei ein Detektionsspektrum des Detektors (230) zumindest teilweise verschieden von einem Emissionsspektrum der Lichtquellen (111) des zweiten Beleuchtungsmoduls (100) ist.

7. Laser-Scanning-Mikroskop (200) nach Anspruch 6, das weiterhin umfasst:
- einen weiteren Detektor (241, 1230), der ein Detektionsspektrum aufweist, welches zumindest teilweise überlappt mit einem Emissionsspektrum der Lichtquellen (111) des zweiten Beleuchtungsmoduls (100).

8. Laser-Scanning-Mikroskop (200) nach einem der voranstehenden Ansprüche , wobei die Lichtquellen (111) auf einer Oberfläche (110A, 110B) des Trägers (101) mit einem geometrischen Füllfaktor angeordnet sind, der nicht größer als 90 % ist, bevorzugt nicht größer als 50 % ist, besonders bevorzugt nicht größer als 30 % ist.

9. Laser-Scanning-Mikroskop (200) nach Anspruch 1,
wobei der lichtdurchlässige Bereich (112) aus lichtdurchlässigem Festkörper-Material ausgebildet ist.

10. Laser-Scanning-Mikroskop (200) nach einem der voranstehenden Ansprüche,
wobei die Recheneinheit (299) weiterhin eingerichtet ist, um mehrere mit den Beleuchtungsrichtungen (91) assoziierte Messbilder zum Erhalten eines Ergebnisbilds, das einen Phasenkontrast aufweist, zu kombinieren.

## Claims

1. Laser scanning microscope (200), comprising:
- a first illumination module (211) with a laser light source,
- a second illumination module (100) with a carrier (101) and with a plurality of light sources (111), which are arranged on the carrier (101),
- a scanning optical unit (213),
- an objective (214),
- a specimen holder (215), which is configured to immobilize a specimen object in a beam path (261) defined by the laser light source,
- a detector (230) and
- a computing unit (299), which is configured to actuate the plurality of light sources (111) to separately and/or sequentially illuminate an object from a plurality of illumination directions (91),
wherein in relation to the first illumination module (211), the scanning optical unit (213) and the objective (214) are arranged upstream of the specimen holder (215) and in the beam path (261),
wherein at least one light source of the plurality of light sources is arranged between a centre of the carrier and a light-transmissive region (112) formed in the carrier or the detector (230) arranged on the carrier, wherein the centre is determined by a point on the carrier defined by a central ray of the beam path (261),
wherein the second illumination module (100) is arranged in such a way that direct light of the at least one light source (111) penetrates into the objective (214).

2. Laser scanning microscope (200) according to Claim 1,
wherein the at least one light-transmissive region (112) is embodied as an aperture that is arranged on the carrier (101) in off-centred fashion.

3. Laser scanning microscope (200) according to Claim 2,
wherein the detector (230, 241) is at least partly arranged in the aperture.

4. Laser scanning microscope (200) according to any of the preceding claims,
wherein the second illumination module (100) is arranged downstream of the specimen holder (215) or upstream of the specimen holder (215) in relation to the first illumination module (211).

5. Laser scanning microscope (200) according to any of the preceding claims,
wherein the second illumination module (100) is arranged between the scanning optical unit (213) and the objective (214) in the beam path (261).

6. Laser scanning microscope (200) according to any of the preceding claims,
wherein a detection spectrum of the detector (230) is at least partly different from an emission spectrum of the light sources (111) of the second illumination module (100).

7. Laser scanning microscope (200) according to Claim 6, furthermore comprising:
- a further detector (241, 1230), having a detection spectrum which at least partly overlaps with an emission spectrum of the light sources (111) of the second illumination module (100).

8. Laser scanning microscope (200) according to any of the preceding claims,
wherein the light sources (111) are arranged on a surface (110A, 110B) of the carrier (101) with a geometric fill factor that is no greater than 90%, preferably no greater than 50%, particularly preferably no greater than 30%.

9. Laser scanning microscope (200) according to Claim 1,
wherein the light-transmissive region (112) is formed from a light-transmissive solid-state material.

10. Laser scanning microscope (200) according to any of the preceding claims,
wherein the computing unit (299) furthermore is configured to combine a plurality of measurement images associated with the illumination directions (91) to obtain a result image, which has a phase contrast.

## Revendications

1. Microscope à balayage laser (200), comprenant :
- un premier module d'éclairage (211) comportant une source de lumière laser,
- un second module d'éclairage (100) comportant un support (101) et une pluralité de sources lumineuses (111) disposées sur le support (101),
- une optique de balayage (213),
- un objectif (214),
- un porte-échantillon (215) conçu pour fixer un objet échantillon dans un trajet de faisceau (261) défini par la source de lumière laser,
- un détecteur (230), et
- une unité de calcul (299) conçue pour commander la pluralité de sources lumineuses (111) afin d'éclairer séparément et/ou séquentiellement un objet à partir d'une pluralité de directions d'éclairage (91),
dans lequel l'optique de balayage (213) et l'objectif (214) sont disposés à l'avant du porte-échantillon (215) et sur le chemin de faisceau (261) par rapport au premier module d'éclairage (211),
dans lequel au moins une source lumineuse de la pluralité de sources lumineuses est disposée entre un centre du support et une région transmettant la lumière (112) formée dans le support ou le détecteur (230) disposé sur le support,
dans lequel le centre est déterminé par un point sur le support qui est défini par un faisceau central du chemin de faisceau (261),
dans lequel le second module d'éclairage (100) est agencé de telle sorte que la lumière directe provenant de la source lumineuse (111) pénètre dans l'objectif (214).

2. Microscope à balayage laser (200) selon la revendication 1,
dans lequel ladite au moins une zone transmettant la lumière (112) est réalisée sous la forme d'un trou disposé de manière décentrée sur le support (101).

3. Microscope à balayage laser (200) selon la revendication 2,
dans lequel le détecteur (230, 241) est disposé au moins partiellement dans le trou.

4. Microscope à balayage laser (200) selon l'une quelconque des revendications précédentes,
dans lequel le second module d'éclairage (100) est disposé à l'arrière du porte-échantillon (215) ou à l'avant du porte-échantillon (215) par rapport au premier module d'éclairage (211).

5. Microscope à balayage laser (200) selon l'une quelconque des revendications précédentes,
dans lequel le second module d'éclairage (100) est disposé entre l'unité optique de balayage (213) et l'objectif (214) dans le trajet du faisceau (261).

6. Microscope à balayage laser (200) selon l'une quelconque des revendications précédentes,
dans lequel un spectre de détection du détecteur (230) est au moins partiellement différent d'un spectre d'émission des sources lumineuses (111) du second module d'éclairage (100).

7. Microscope à balayage laser (200) selon la revendication 6, comprenant en outre :
- un autre détecteur (241, 1230), présentant un spectre de détection qui chevauche au moins partiellement un spectre d'émission des sources lumineuses (111) du second module d'éclairage (100).

8. Microscope à balayage laser (200) selon l'une quelconque des revendications précédentes,
dans lequel les sources lumineuses (111) sont disposées sur une surface (110A, 110B) du support (101) avec un facteur de remplissage géométrique qui n'est pas supérieur à 90 %, de préférence non supérieur à 50 %, de manière particulièrement préférée non supérieur à 30 %.

9. Microscope à balayage laser (200) selon la revendication 1,
dans lequel la région transmettant la lumière (112) est réalisée à partir d'un matériau à semi-conducteur transmettant la lumière.

10. Microscope à balayage laser (200) selon l'une quelconque des revendications précédentes,
dans lequel l'unité de calcul (299) est en outre conçue pour combiner une pluralité d'images de mesure associées aux directions d'éclairage (91) afin d'obtenir une image résultante présentant un contraste de phase.
